# EUROPEAN PATENT APPLICATION

(11) **EP 4 794 235 A1**
(43) Date of publication of application: **19.08.2026**
(21) Application number: 23955109.6
(22) Date of filing: 11.10.2023
(51) Int. Cl.: H04L 5/00

(54) **METHOD FOR TRANSMITTING REFERENCE SIGNAL, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong 523860 (CN); XIAO, Han, Dongguan, Guangdong 523860 (CN)
(74) Representative: Taor, Simon Edward William
(86) International application number: PCT/CN2023/123983
(87) International publication number: WO 2025/076724

(57) **Abstract**

Provided are a method for transmitting a reference signal, a terminal device, and a network device. The method comprises: a terminal device receiving first configuration information sent by a network device, wherein the first configuration information is used for configuring reference signals, which comprise a first-type reference signal and a second-type reference signal; the transmission resource that can be used for transmitting the first-type reference signal is a first-type transmission resource, and the transmission resource that can be used for transmitting the second-type reference signal is a second-type transmission resource; and the first-type transmission resource is not used for transmitting signals other than the first-type reference signal, and the second-type transmission resource can be used for transmitting signals other than the second-type reference signal. In the embodiments of the present application, a network device can send first configuration information to a terminal device, so as to configure a first-type reference signal and a second-type reference signal at the same time, thereby improving the communication quality while reducing the transmission overhead of the reference signals.

## Description

### TECHNICAL FIELD

The present disclosure relates to the technical field of communication, and more particularly, to a method for transmitting reference signals, a terminal device and a network device.

### BACKGROUND

At present, multiple types of reference signals are supported in a communication system. For the first-type reference signals, the transmission resources used for transmitting the type of reference signals cannot be used for transmitting other signals. For the second-type reference signals, the transmission resources used for transmitting the type of reference signals may also be used for transmitting other signals. If the first-type reference signals are transmitted, the transmission resources of this type of reference signals cannot be used for transmitting other signals, resulting in a large transmission overhead of the reference signals. If the second-type reference signals are transmitted, in some complex scenarios, it is difficult to accurately separate the second-type reference signals from other signals, resulting in degradation of communication quality.

### SUMMARY

The present disclosure provides a method for transmitting reference signals, a terminal device, and a network device. Various aspects of the present disclosure are described below.

In the first aspect, a method for transmitting reference signals is provided. The method includes the following operation. A terminal device receives the first configuration information sent by a network device. The first configuration information is used for configuring reference signals. The reference signals include first-type reference signals and second-type reference signals, transmission resources that are available to transmit the first-type reference signals are first-type transmission resources, and transmission resources that are available to transmit the second-type reference signals are second-type transmission resources. The first-type transmission resources are not available to transmit other signals except for the first-type reference signals, and the second-type transmission resources are available to transmit other signals except for the second-type reference signals.

In the second aspect, a method for transmitting reference signals is provided. The method includes the following operation. A network device sends the first configuration information to a terminal device. The first configuration information is used for configuring reference signals. The reference signals include first-type reference signals and second-type reference signals, transmission resources that are available to transmit the first-type reference signals are first-type transmission resources, and transmission resources that are available to transmit the second-type reference signals are second-type transmission resources. The first-type transmission resources are not available to transmit other signals except for the first-type reference signals, and the second-type transmission resources are available to transmit other signals except for the second-type reference signals.

In the third aspect, a terminal device is provided. The terminal device includes a receiving unit. The receiving unit is configured to receive the first configuration information sent by a network device. The first configuration information is used for configuring reference signals. The reference signals include first-type reference signals and second-type reference signals, transmission resources that are available to transmit the first-type reference signals are first-type transmission resources, and transmission resources that are available to transmit the second-type reference signals are second-type transmission resources. The first-type transmission resources are not available to transmit other signals except for the first-type reference signals, and the second-type transmission resources are available to transmit other signals except for the second-type reference signals.

In the fourth aspect, a network device is provided. The network device includes a sending unit. The sending unit is configured to send first configuration information to a terminal device. The first configuration information is used for configuring reference signals. The reference signals include first-type reference signals and second-type reference signals, transmission resources that are available to transmit the first-type reference signals are first-type transmission resources, and transmission resources that are available to transmit the second-type reference signals are second-type transmission resources. The first-type transmission resources are not available to transmit other signals except for the first-type reference signals, and the second-type transmission resources are available to transmit other signals except for the second-type reference signals.

In the fifth aspect, a terminal device is provided. The terminal device includes a processor, a memory and a communication interface. The memory is configured to store one or more computer programs, and the processor is configured to invoke the computer programs in the memory to cause the terminal device to perform a part or all of the operations in the method of the first aspect.

In the sixth aspect, a network device is provided. The network device includes a processor, a memory and a transceiver. The memory is configured to store one or more computer programs, and the processor is configured to invoke the computer programs in the memory to cause the network device to perform a part or all of the operations in the method of the second aspect.

In the seventh aspect, the embodiments of the present disclosure provide a communication system. The communication system includes the above-described terminal device and/or network device. In another possible design, the system may further include other devices that interact with the terminal device or the network device in the solution provided by the embodiments of the present disclosure.

In the eighth aspect, the embodiments of the present disclosure provide a computer-readable storage medium storing a computer program that causes a communication device (e.g., a terminal device or a network device) to perform a part or all of the operations in the methods of the above aspects.

In the ninth aspect, the embodiments of the present disclosure provide a computer program product. The computer program product includes a non-transitory computer-readable storage medium storing a computer program operable to cause a communication device (e.g., a terminal device or a network device) to perform a part or all of the operations in the methods of the above aspects. In some implementations, the computer program product may be a software installation package.

In the tenth aspect, embodiments of the present disclosure provide a chip. The chip includes a memory and a processor, and the processor can invoke and execute a computer program from the memory to implement a part or all of the operations described in the methods of the above aspects.

In the embodiment of the present disclosure, the network device may configure the first-type reference signals and the second-type reference signals at the same time by sending the first configuration information to the terminal device. Compared with the solution in which only the first-type reference signals are transmitted in the conventional solution, since the second-type reference signals are introduced, the transmission resources of the second-type reference signals can be used for transmitting other signals, which is helpful to reduce the transmission overhead of the reference signals. Compared with the solution in which only the second-type reference signals are transmitted in the conventional solution, since the transmission of the first-type reference signals is introduced, the transmission resources that are used to transmit the first-type reference signals only are used to transmit the first reference signal, which is helpful to reduce the difficulty of separating the reference signals transmitted on the same transmission resource from other signals, thereby improving the communication quality.

### BRIEF DESCRIPTION OF THE DRAWINGS

FIG. 1 is a schematic flowchart of a signal transmission in a wireless communication system to which the embodiments of the present disclosure are applied.
FIG. 2 is a schematic diagram of channel estimation and signal recovery to which the embodiments of the present disclosure are applied.
FIG. 3(a) to FIG. 3(c) are schematic diagrams of pilot patterns under different configurations.
FIG. 4 is a schematic flowchart of neurons implementing nonlinear mapping dependent on activation functions.
FIG. 5 is a schematic diagram of a neural network to which the embodiments of the present disclosure are applied.
FIG. 6 is a schematic structural diagram of a convolutional neural network.
FIG. 7 is a schematic diagram of the working principle of the long short-term memory model.
FIG. 8 is a schematic flowchart of channel estimation based on a channel estimation module.
FIG. 9 is a schematic structural diagram of a wireless communication system to which the embodiments of the present disclosure are applied.
FIG. 10 is a schematic diagram of a non-orthogonal transmission method to which the embodiments of the present disclosure are applied.
FIG. 11 is a schematic diagram of transmission solutions of the first-type reference signals and the second-type reference signals according to the embodiments of the present disclosure.
FIG. 12 is a schematic diagram of arrangement manners of the first-type transmission resources and the second-type transmission resources according to the embodiments of the present disclosure.
FIG. 13 is a schematic diagram of arrangement manners of the first-type transmission resources and the second-type transmission resources according to another embodiment of the present disclosure.
FIG. 14 is a schematic diagram of arrangement manners of the first-type transmission resources and the second-type transmission resources according to another embodiment of the present disclosure.
FIG. 15 is a schematic flowchart of a method for transmitting reference signals according to the embodiments of the present disclosure.
FIG. 16 is a schematic diagram of arrangement manners of the first-type transmission resources and the second-type transmission resources according to another embodiment of the present disclosure.
FIG. 17 is a schematic diagram of a terminal device according to the embodiments of the present disclosure.
FIG. 18 is a schematic diagram of a network device according to the embodiments of the present disclosure.
FIG. 19 is a schematic configuration diagram of a communication apparatus according to the embodiments of the present disclosure.

### DETAILED DESCRIPTION

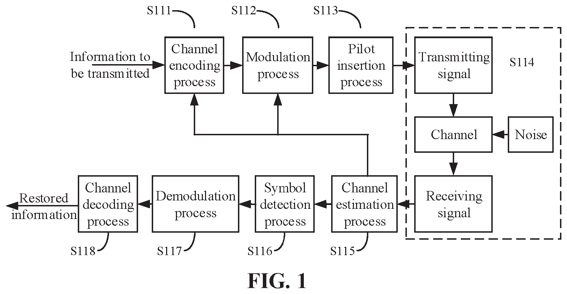

Hereinafter, technical solutions in the present disclosure will be described with reference to the accompanying drawings. In order to facilitate understanding of the present disclosure, terms and communication processes related to embodiments of the present disclosure will be described below with reference to FIG. 1 to FIG. 8.

### 1. Signal transmission processes in a wireless communication system

FIG. 1 is a flowchart of a signal transmission in a wireless communication system to which the embodiments of the present disclosure are applied. As illustrated in FIG. 1, the signal transmission processes in the wireless communication system may roughly include various signal processing processes S111 to S118 illustrated in FIG. 1. A part or all of the signal processing processes illustrated in FIG. 1 may be implemented by separate AI models.

The transmitter performs channel encoding on the information to be transmitted in the channel encoding process S111 to obtain the encoded bitstream. The information to be transmitted may be in the form of a bitstream.

The bitstream is modulated into modulation symbols in the modulation process S112.

In the pilot insertion process S113, pilot symbols are inserted into the modulation symbols to form signals to be transmitted. The pilot symbols may be used by the receiver for channel estimation and symbol detection.

In the transmission signal S114, the above signals are carried on the channel and transmitted to the receiver. The noise is usually superimposed during the transmission process of signals through the channel.

In the channel estimation process S115, the receiver may perform channel estimation based on the reference signals to obtain channel state information-reference signal (CSI), and feed back the CSI to the transmitter through the feedback link, so that the transmitter can adjust the manners of channel encoding, modulation, precoding, and the like.

In the symbol detection process S116, symbol detection is performed on the received modulation symbol to obtain a detection result.

In the demodulation process S117, the received modulation symbols are demodulated based on the detection result to obtain a bitstream.

In the channel decoding process S118, the bitstream is decoded to obtain recovered information. The recovered information may be in the form of a bit stream.

It should be understood that in the signal processing processes S111 to S118 illustrated in FIG. 1, merely common signal processing processes in the wireless communication system are exemplarily listed, and the wireless communication system may further include signal processing processes such as resource mapping, precoding, interference cancellation, CSI measurement, and the like, and these signal processing processes may also be implemented by separate artificial intelligence (AI) models. For the sake of brevity, these signal processing processes will not be described in detail in the present disclosure.

### 2. Channel estimation

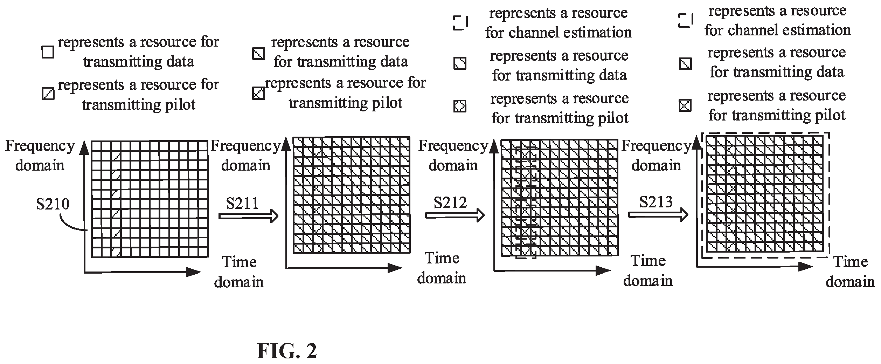

Due to the complexity and time-varying nature of the wireless channel environment, in a wireless communication system (e.g., the wireless communication system introduced above), the receiver needs to recover the received signal based on the estimation result of the channel. FIG. 2 is a schematic diagram of channel estimation and signal recovery to which the embodiments of the present disclosure are applied.

As illustrated in FIG. 2, in operation S210, the transmitter transmits a series of reference signals known to the receiver, such as a channel state information-reference signal (CSI-RS), a demodulation reference signal (DMRS), and the like, in addition to the data signal on the time-frequency resources.

In operation S211, the transmitter transmits the above data signals and the reference signals to the transmitter through the channel.

The time-frequency resources occupied by the reference signals are different from the time-frequency resources occupied by the data signals.

In operation S212, the receiver may perform channel estimation after receiving the reference signals. In one possible implementation, the receiver may estimate channel information of the channel on which the reference signals are transmitted based on the pre-stored reference signals and the received reference signals by means of a channel estimation algorithm (e.g., least squares method (LS) channel estimation).

In operation S213, the receiver may recover the channel information of the full time-frequency resource by using an interpolation algorithm according to the channel information of the channel on which the pilot sequence is transmitted, and the channel information is used for subsequent CSI feedback, data recovery, or the like.

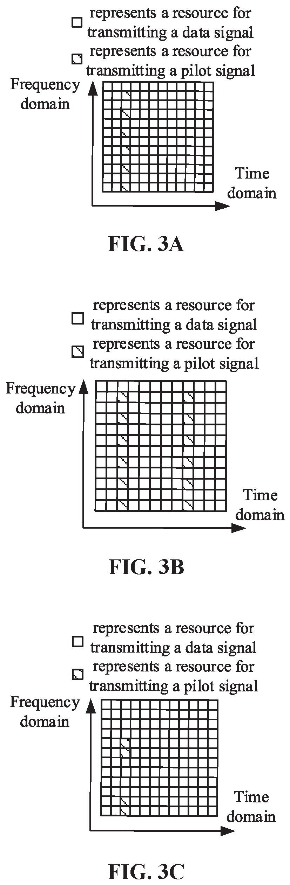

Based on the above description with reference to FIG. 2, it can be seen that the time-frequency resources for transmitting the reference signals and the time-frequency resources for transmitting the data signals are different time-frequency resources. In addition, in some communication protocols (for example, the NR communication protocol), it is stipulated that symbols (hereinafter referred to as "pilot symbols") for transmitting reference signals and symbols (hereinafter also referred to as "data symbols") for transmitting data signals are different. FIG. 3 illustrates patterns of data symbols and pilot symbols in different configurations.

Referring to FIG. 3(a), in one resource block (RB), the pilot symbols are distributed on multiple resource elements (REs) corresponding to symbol 2, with a spacing of a subcarrier. Referring to FIG. 3(b), in one RB, pilot symbols occupy a part of multiple symbols corresponding to symbol 2 and symbol 8 in the RB. Referring to FIG. 3(c), in one RB, pilot symbols occupy multiple groups of REs in symbol 2 in the RB, and each group of REs includes two transmission REs that are consecutive in the frequency domain.

Generally, among the patterns illustrated in FIG. 3 (a) to FIG. 3 (c), different patterns may be adapted to different communication environments. In some implementations, when the moving speed of the terminal device is high and the channel characteristics is fast time-varying, a pattern in which the pilot symbol distribution is dense may be selected, which is helpful to improve the accuracy of channel quality estimation of the entire RB. For example, the pattern illustrated in FIG. 3 (b) may be selected.

In other implementations, when the moving speed of the terminal device is slow and the channel characteristics is low time-varying, a pattern in which the pilot symbol distribution is sparse may be selected, which is helpful to reduce the overhead generated by transmitting the reference signals on the premise of ensuring the accuracy of channel quality estimation of the entire RB.

### 3. Neural network

In recent years, artificial intelligence research represented by neural network has made great achievements in many fields, and it will also play an important role in the production and life of people for a long time to come. The neural network may be understood as an operation model composed of multiple neuron nodes connected to each other, in which the connection between nodes may represent the weighted value from input signal to output signal, usually called parameter. Each node performs a weighted summation for different input signals and the result is output through a specific activation function.

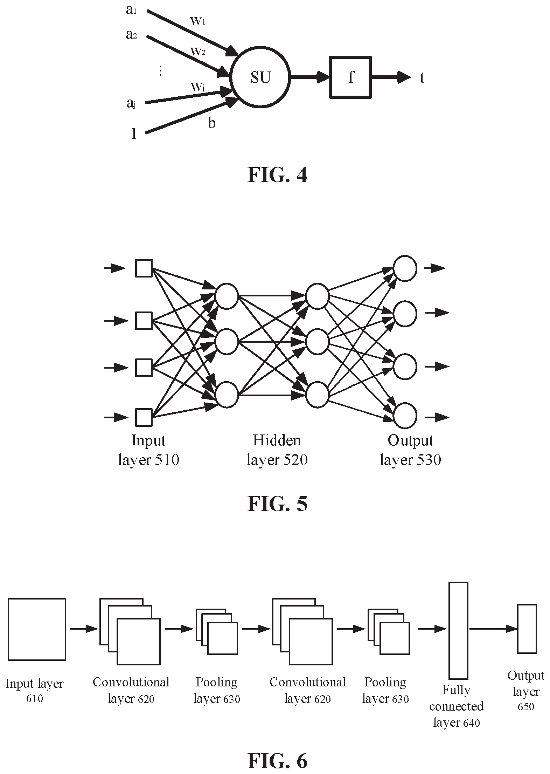

Referring to FIG. 4, neurons can implement nonlinear mapping depending on the activation function. The input of the neuron may be denoted A, each dimension of the input is denoted aj, and the corresponding parameter is denoted wj, and the input is enhanced or weakened by wj and summation units (SU). In addition, the output of the SU may be input into the activation function f to obtain the output t. The values of j are 1, 2,..., n.

Common neural networks include convolutional neural network (CNN), recurrent neural network (RNN), deep neural network (DNN), etc.

Hereinafter, a neural network applicable to the embodiments of the present disclosure will be described with reference to FIG. 5. The neural network illustrated in FIG. 5 may be divided into three categories according to the location of different layers: input layer 510, hidden layer 520, and output layer 530. In general, the first layer is the input layer 510, the last layer is the output layer 530, and the intermediate layers between the first layer and the last layer are hidden layers 520.

The input layer 510 is used for input data. The input data may be, for example, a received signal received by a receiver. The hidden layer 520 is used to process the input data, for example, to decompress the received signal. The output layer 530 outputs processed output data, for example, to output a decompressed signal.

As illustrated in FIG. 5, the neural network includes multiple layers, each layer includes multiple neurons, and the neuron between the layers may be fully connected or partially connected. For connected neurons, the output of the neurons of the previous layer may be used as the input of the neurons of the next layer.

With the continuous development of neural network research, neural network deep learning algorithms have been proposed in recent years, more hidden layers are introduced into neural networks to form DNN. More hidden layers allow DNN to better describe complex situations in the real world. Theoretically, the more parameters a model has, the higher the complexity and the greater the "capacity", which means that it can complete more complex learning tasks. This neural network model is widely used in pattern recognition, signal processing, optimization combination, anomaly detection and so on.

A CNN is a deep neural network with a convolutional structure, and its structure is illustrated in FIG. 6, which may include an input layer 610, convolutional layers 620, pooling layers 630, a fully connected layer 640, and an output layer 650.

Each convolution layer 620 may include multiple convolution operators, and the convolution operator is also referred to as a kernel, which may function as a filter for extracting specific information from an input signal. The convolution operator may essentially be a parameter matrix, which is usually predefined.

The parameter values in these parameter matrices need to be obtained through a lot of training in practical applications. Each parameter matrix formed by the parameter values obtained by training can extract information from the input signal, thus helping CNN to make correct prediction.

When CNN has multiple convolutional layers, the initial convolutional layer often extracts more general features, and the general feature is also referred to as low-level features. As the depth of CNN deepens, the features extracted from subsequent convolutional layers become more and more complex.

In the pooling layer 630, since it is often necessary to reduce the number of training parameters, it is often necessary to periodically introduce a pooling layer after the convolutional layer. For example, it may be one convolutional layer followed by one pooling layer as illustrated in FIG. 6, or it may be multiple convolutional layers followed by one or more pooling layers. In the process of signal processing, the sole purpose of the pooling layer is to reduce the space size of the extracted information.

In the fully connected layer 640, after processing by the convolutional layers 620 and the pooling layers 630, the CNN is not sufficient to output the required output information. Because, as previously described, the convolutional layers 620 and the pooling layers 630 will only extract features and reduce parameters brought by the input data. However, in order to generate the final output information (for example, a bitstream of raw information transmitted by the transmitter), the CNN also needs to utilize the fully connected layer 640. Generally, the fully connected layer 640 may include multiple hidden layers, and the parameters included in the multiple hidden layers may be trained in advance according to relevant training data of a specific task type, for example, the task type may include decoding data signals received by a receiver, or for example, the task type may further include channel estimation based on reference signals received by the receiver.

After the multiple hidden layers in the fully connected layer 640, the last layer of the entire CNN is the output layer 650 for outputting the result. Typically, the output layer 650 is provided with a loss function (for example, a loss function similar to classification cross entropy) for calculating a prediction error or for evaluating the degree of difference between a result (also known as a prediction value) output by the CNN model and an ideal result (also known as a true value).

In order to minimize the loss function, the CNN model needs to be trained. In some implementations, the CNN model may be trained by using a backpropagation algorithm (BP). The training process of BP consists of a forward propagation process and a back propagation process. In the process of forward propagation (as illustrated in FIG.6, the propagation from 610 to 650 is forward propagation), the input data is input into the above respective layers of the CNN model, is processed layer by layer and is transmitted to the output layer. If the output result at the output layer is quite different from the ideal result, the minimization of the above loss function is taken as the optimization objective, and it is transferred to back propagation (as illustrated in FIG. 6, the propagation from 650 to 610 is back propagation), and the partial derivative of the optimization objective to the weight of each neuron is obtained layer by layer to form the ladder of the optimization objective to the weight vector, which is used as the basis for modifying the model parameters. The training process of CNN is completed in the parameter modification process. When the above error reaches the expected value, the training process of CNN ends.

It should be noted that the CNN illustrated in FIG. 6 is only an example of a convolutional neural network, and in a specific application, the convolutional neural network may also exist in the form of other network models, and the embodiments of the present disclosure does not limit this.

The purpose of RNNs is to process sequence data. In the traditional neural network model (for example, in the CNN model), from the input layer to the hidden layer to the output layer, the layers are fully connected, and the nodes between layers are unconnected. However, this ordinary neural network is powerless for many problems. For example, if what the next word in a sentence will be needs to be predicted, the previous words need to be usually used, because the words before and after in a sentence are not independent. The reason why RNNs are called recurrent neural networks is that the current output of a sequence is also related to the previous output. The specific manifestation is that the network will memorize the previous information and apply it to the calculation of the current output, that is, the nodes between the hidden layers are no longer unconnected but connected, and the input of the hidden layer includes not only the output of the input layer but also the output of the hidden layer at the previous moment. Theoretically, RNNs are capable of processing sequence data of any length.

The training of RNN is the same as the training of traditional artificial neural network (ANN). The BP error back propagation algorithm is also used, but there is a difference. If the RNNs are network expanded, the parameters W, U, V are shared, but the parameters W, U, V are not shared for the traditional neural networks. In addition, in using the gradient descent algorithm, the output of each step depends not only on the network of the current step, but also on the state of the network of the previous steps. For example, when t = 4, three steps need to be passed backwards, and various gradients need to be added to the subsequent three steps. This learning algorithm is called back propagation through time (BPTT).

The reason why recurrent neural networks are required now that artificial neural networks and convolutional neural networks present is very simple. Whether it is a convolutional neural network or an artificial neural network, their premise is that the elements are independent of each other, and the input and output are also independent, such as cats and dogs. But in the real world, many elements are interconnected, such as the change of stocks over time. One person said: I like traveling, my favorite place is Yunnan, and I must visit _ when I have the opportunity in the future. To fill in the blank here, anyone would know that it is "Yunnan". We infer from the content of the context, but it is quite difficult for the machine to do this operation. Therefore, there is the current recurrent neural network, whose essence is: it has the ability to remember like a human. Therefore, its output depends on the current input and memory. In one sentence, an RNN is the repeated use of a single unit structure.

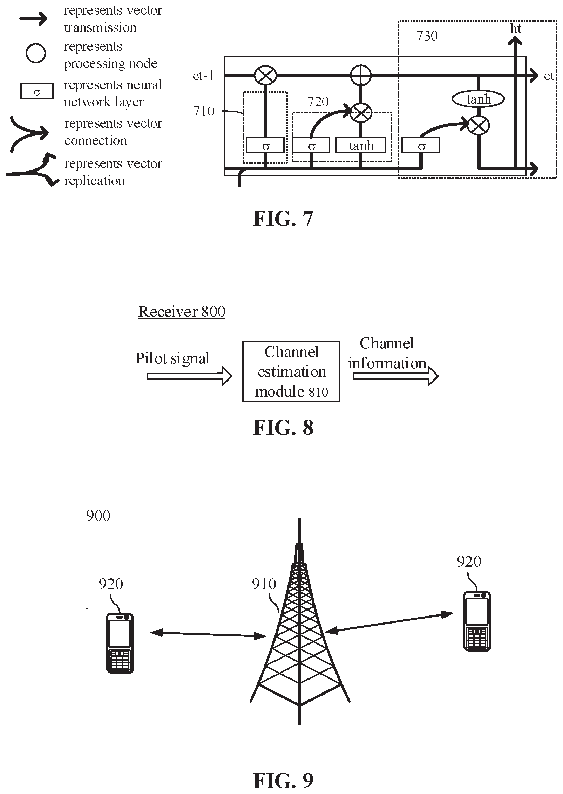

At present, in order to solve the problem of gradient explosion or disappearance of the RNN, a long short-term memory (LSTM) model is obtained by deformation on the basis of the RNN. Referring to FIG. 7, in the LSTM, a new memory unit ct (also referred to as "cell state") is introduced for linear cyclic information transfer while outputting information to the external state ht of the hidden layer. At each time t, ct records history information up to the current time. Unlike RNN, which only considers the most recent state, the memory unit will decide which states should be left and which states should be forgotten, which solves the shortcomings of traditional RNN in long-term memory.

Referring to FIG. 7, in order to realize the selection of the state described above, the memory unit introduces a gate control mechanism to control the path of information transmission, which is similar to the gate in the data circuit, with "0" indicating closed and "1" indicating started. The memory unit includes a forgetting gate 710, an input gate 720, and an output gate 730. The forgetting gate is used to control how much information the memory unit ct-1 at the previous time needs to forget, the input gate is used to control how much information the candidate state (c_t) at the current time needs to be stored, and the output gate is used to control how much information the memory unit ct at the current time needs to be output to the external state ht.

### 4. Channel estimation based on AI decoder

The channel estimation based on the AI decoder aims to implement channel estimation by using the AI-based channel estimation module to process the reference signals received by the receiver. FIG. 8 illustrates a process of performing channel estimation based on a channel estimation module. Referring to FIG. 8, the reference signals received by the receiver 800 is taken as the input of the channel estimation module 810, and accordingly, the channel estimation module 810 processes the input reference signals to output channel information. In addition, in some implementations, other auxiliary information may be added in addition to the reference signals to improve the accuracy of the channel information output by the channel estimation module. For example, the channel estimation module 810 may also be input to original sequences of reference signals pre-stored by the receiver 800, energy levels at which the receiver 800 receives the reference signals, transmission delays when transmitting the reference signals, or noises when transmitting the reference signals, etc.

The communication process and terminology related to the embodiments of the present disclosure are described above with reference to FIG. 1 to FIG. 8, and the communication system to which the embodiments of the present disclosure are applied is described below with reference to FIG. 9.

FIG. 9 is a wireless communication system 900 to which the embodiments of the present disclosure are applied. The wireless communication system 900 may include a network device 910. The network device 910 may be a device that communicates with the terminal devices 920. The network device 910 may provide communication coverage for a particular geographic area and may communicate with the terminal devices 920 located within the coverage area.

FIG. 9 exemplarily illustrates one network device 910 and two terminal devices 920. Alternatively, the wireless communication system 900 may include a plurality of network devices and another number of terminal devices may be included within the coverage range of each network device, which is not limited by the embodiments of the present disclosure.

Alternatively, the wireless communication system 900 may further include other network entities such as a network controller and a mobility management entity, which are not limited in the embodiments of the present disclosure.

Alternatively, the terminal devices 920 may also communicate directly with each other, for example, two terminal devices 920 may communicate through a device-to-device (D2D) link.

It should be understood that the technical solutions of the embodiments of the present disclosure may be applied to various communication systems, such as a 5th generation (5G) system or a new radio (NR) system, a long term evolution (LTE) system, an LTE frequency division duplex (FDD) system, an LTE time division duplex (TDD), and the like. The technical solutions provided in the present disclosure may also be applied to future communication systems, such as a sixth generation mobile communication system, a satellite communication system, and the like.

The terminal device in the embodiments of the present disclosure may also be referred to as a user equipment (UE), an access terminal, a subscriber unit, a subscriber station, a mobile station (MS), a mobile stage, a mobile Terminal (MT), a remote station, a remote terminal, a mobile device, a user terminal, a terminal, a wireless communication device, a user agent, or a user device. The terminal device in the embodiments of the present disclosure may be a device that provides voice and/or data connectivity to a user, and may be used to connect people, objects, and machines, for example, a handheld device having a wireless connection function, a vehicle-mounted device, or the like. The terminal device in the embodiments of the present disclosure may be a mobile phone, a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, the UE may be used to act as a base station. For example, a UE may act as a scheduling entity that provides sidelink signals between UEs in V2X or D2D, etc. For example, cellular telephones and automobiles communicate with each other by using sidelink signals. Cellular telephones and smart home devices communicate, without relaying communication signals through a base station.

The network device in the embodiments of the present disclosure may be a device for communicating with a terminal device, and the network device may also be referred to as an access network device or a radio access network device, for example, the network device may be a base station. The network device in the embodiments of the present disclosure may refer to a radio access network (RAN) node (or device) that connects the terminal device to the wireless network. The base station may generally cover the following various names, or be replaced with the following various names, such as, a NodeB, an evolved NodeB (eNB), a next generation NodeB (gNB), a relay station, an access point, a transmitting and receiving point (TRP), a transmitting point (TP), a master station (MeNB), a secondary station (SeNB), an MSR node, a home base station, a network controller, an access node, a radio node, an access point (AP), a transmission node, a transceiver node, a base band unit (BBU), a Remote Radio Unit (RRU), an active antenna unit (AAU), an remote radio head (RRH), a central unit (CU), a distributed unit (DU), a location node, and the like. The base station may be a macro base station, a micro base station, a relay node, a donor node, or the like, or a combination thereof. The base station may also refer to a communication module, modem, or chip for disposal within the aforementioned devices or apparatus. The base station may also be a mobile switching center or a device that assumes a base station function in device-to-device (D2D), a vehicle-to-everything (V2X), a machine-to-machine (M2M) communication, a network-side device in a 6G network, a device that assumes a base station function in a future communication system, or the like. The base stations may support networks of the same or different access technologies. The embodiments of the present disclosure do not limit the specific technology and the specific device form adopted by the network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the network device in the embodiments of the present disclosure may refer to a CU or a DU, or the network device includes a CU and a DU. The gNB may also include an AAU.

The network device and the terminal device may be deployed on land, including indoor or outdoor, handheld or vehicle-mounted. They may also be deployed on the water. They may also be deployed on aircraft, balloons and satellites in the air. In the embodiments of the present disclosure, the scenario in which the network device and the terminal device are located is not limited.

It should be understood that the communication device referred to in the present disclosure may be a network device or a terminal device. For example, the first communication device is a network device, and the second communication device is a terminal device. In another example, the first communication device is a terminal device, and the second communication device is a network device. For another example, both the first communication device and the second communication device are network devices or both are terminal devices.

It should also be understood that all or part of the functionality of the communication device in the present disclosure may also be implemented by software functionality running on hardware, or by virtualization functionality instantiated on a platform, such as a cloud platform.

Currently, in known communication systems, signals are transmitted over different transmission resources in order to improve the reliability of transmission signals. For example, signals transmitted on multiple transmission resources are transmitted in an orthogonal transmission manner. The orthogonal transmission may be understood as processing signals transmitted on multiple transmission resources into mutually orthogonal signals for transmission, and the orthogonal signals are transmitted independently of each other without interfering with each other. In the scenario of orthogonal transmission, a certain transmission resource can only be used to transmit one type of signals at a certain time, resulting in low utilization of the transmission resource. On the other hand, when the total transmission resources are constant, if the number of transmission resources occupied by a certain signal (hereinafter, also referred to as "first signals") increases, it means that the number of transmission resources available for transmission of other signals (hereinafter, also referred to as "second signals") decreases, and other signals may not be transmitted in time.

Taking the first signals as pilot signals and the second signals as data signals as an example, the pilot signals and the data signals are transmitted orthogonally on different transmission resources. That is to say, for a certain transmission resource, it can only be used to transmit data signals or pilot signals at a certain time, resulting in a low utilization rate of the transmission resource. On the other hand, when the total transmission resources are constant, if the number of transmission resources occupied by the pilot signals increases, it means that the number of transmission resources available for transmission of the data signals decreases, which may lead to that the data signals may not be transmitted in time. For another example, if the number of transmission resources occupied by the data signals increases, it means that the number of transmission resources available for transmission of the pilot signals decreases, which may lead to a decrease in the accuracy of channel estimation based on the pilot signals.

Therefore, in view of the above problems, the embodiments of the present disclosure provide a wireless communication method, in which the first signals and the second signals may be transmitted on the same transmission resource (also referred to as a "target transmission resource") to improve the utilization rate of the transmission resource.

In some implementations, the first signals and the second signals may be transmitted non-orthogonally on the target transmission resource, that is, the target signals transmitted on the target transmission resource includes the first signals and the second signals transmitted non-orthogonally. In other words, the second signals and the first signals may be transmitted non-orthogonally on the target transmission resource.

Based on the above description, it may be seen that the first signals and the second signals may be transmitted through the target transmission resource at the same time, which may be understood that the first signals and the second signals are transmitted on the target transmission resource in a superimposed manner. Therefore, in the embodiments of the present disclosure, the above target transmission resource may also be referred to as a "superimposed transmission resource".

In the embodiments of the present disclosure, the first signals and the second signals may be different types of signals. For example, the second signals may include data signals, and correspondingly, the first signals may include pilot signals. Here, the pilot signals are also referred to as reference signals, and the reference signals may be, for example, CSI-RSs, DMRSs, phase-tracking reference signals (PT-RSs), sounding reference signals (SRSs), SS/PBCH blocks, a positioning reference signal (PRS), or the like. Of course, in the embodiments of the present disclosure, the first signals and the second signals may be other different types of signals.

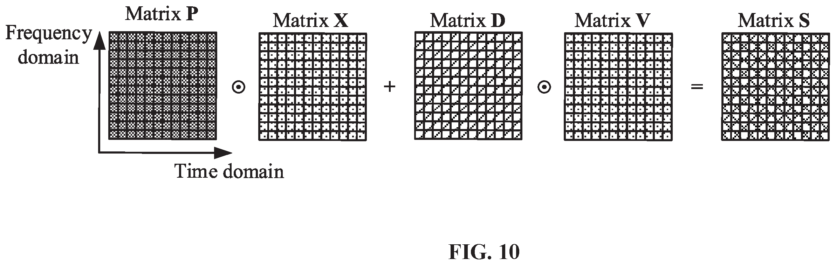

In order to facilitate understanding, the non-orthogonal transmission manner to which the embodiments of the present disclosure are applied will be described below with reference to FIG. 10. It should be noted that the non-orthogonal transmission manner to which the embodiments of the present disclosure are applied is not limited thereto.

Referring to FIG. 10, it is assumed that the target transmission resource for non-orthogonal transmission belongs to a transmission resource set, the target signal(s) transmitted on one or more target transmission resources in the transmission resource set is(are) represented by a matrix **S.** Accordingly, the matrix **S** is determined by a formula **S** = **V⊙D** + **X⊙P**. In other word, the matrix **S** satisfies **V⊙D** + **X⊙P**. The matrix **V** represents the second parameter(s) associated with target transmission resource(s) in the transmission resource set. The matrix **X** represents the first parameter(s) associated with target transmission resource(s) in the transmission resource set. The matrix **D** represents second signal(s) transmitted on target transmission resource(s) in the transmission resource set. The matrix **P** represents first signal(s) transmitted on target transmission resource(s) in the transmission resource set. ⊙ represents the Hadmar product.

In some implementations, it is assumed that the energy threshold corresponding to the target transmission resource is 1, the matrix **V** is determined based on the formula **V** = *sqrt* (**A**), and the matrix **X** is determined based on the formula **X** = *sqrt*(1 - **A**), where the matrix **A** ∈ [0, 1], and *sqrt* () represents the square root calculation.

In the embodiments of the present disclosure, the number of target transmission resource(s) included in the transmission resource set is not limited. Accordingly, the dimension of the matrixes (for example, the matrix **S,** the matrix **V,** the matrix **D,** the matrix **P,** the matrix **A,** the matrix **V,** and the matrix **X**) described above is associated with the dimension (or the number) of the target transmission resource(s) in the transmission resource set. For example, each element in the matrix may correspond to one transmission resource in the transmission resource set. In some implementations, the dimensions of the matrixes are the same as the dimension of the target transmission resource(s) in the transmission resource set. Taking the transmission resource set as an RB as an example, the RB may be expressed as REs of N rows and M columns, and all the REs in the RB are superimposed transmission resources. Accordingly, the above matrixes may be matrixes of N rows and M columns, wherein, M and N are positive integers.

Generally, when the target transmission resource(s) allocated by the system changes, the dimension of the above matrixes also changes. For example, if the target transmission resources allocated by the system are two RBs, the dimension of the matrixes are the same as the dimension of the REs in the two RBs. It is assumed that the RB may be expressed as REs of N rows and M columns, then two RBs include REs of 2N rows and 2M columns, and the dimension corresponding to the two RBs is 2N rows and 2M columns. At this time, when all REs in the two RBs are superimposed transmission resources, the dimension of the matrixes may be matrixes of 2N rows and 2M columns.

Generally, for target signal(s) that are non-orthogonally transmitted, the receiving end may receive it(them) based on the model, which is helpful to improve the reception performance of the target signal(s). The model may be an AI model and/or a machine learning (ML) model.

As described above, various types of reference signals are supported in the communication system. For the first-type reference signals, the transmission resources used for transmitting the type of reference signals cannot transmit other signals. For the second-type reference signals, the transmission resources used for transmitting the type of reference signals may also be used for transmitting other signals. If the first-type reference signals are transmitted, the transmission resources of this type of reference signals cannot be used for transmitting other signals, resulting in a large transmission overhead of the reference signals. If the second-type reference signals are transmitted, in some complex scenarios, it may be difficult to accurately separate the second-type reference signals from other signals, resulting in degradation of communication quality. For example, it is assumed that the receiving end receives the second-type reference signals based on the model, due to insufficient generalization capability, the accuracy of model reasoning decreases, and channel estimation may not be accurately performed based on the reference signals, resulting in a degradation of communication quality.

Therefore, in view of the above problems, the embodiments of the present disclosure provide a method for transmitting reference signals, that is, the first-type reference signals and the second-type reference signals may be transmitted simultaneously in the first transmission resource, which is helpful to improve communication quality while reducing the overhead of transmitting the reference signals.

In the embodiments of the present disclosure, the first transmission resource is not limited. In some implementations, the first transmission resource may include multiple transmission resources, and the multiple transmission resources may be divided into the first-type transmission resources and the second-type transmission resources. For example, the first transmission resource may be an RB. Accordingly, a part of the REs in the RB may be the first-type transmission resources, and another part of the REs in the RB may be the second-type transmission resources.

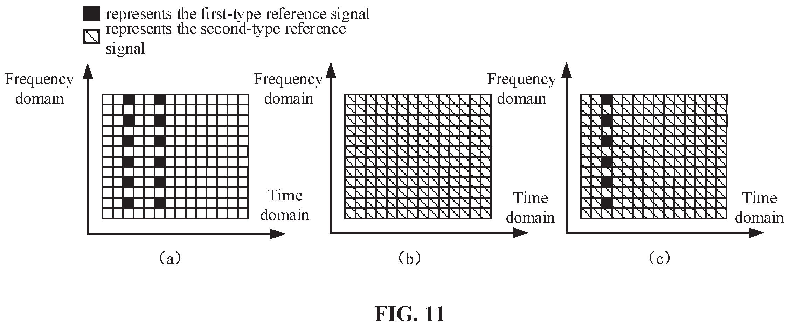

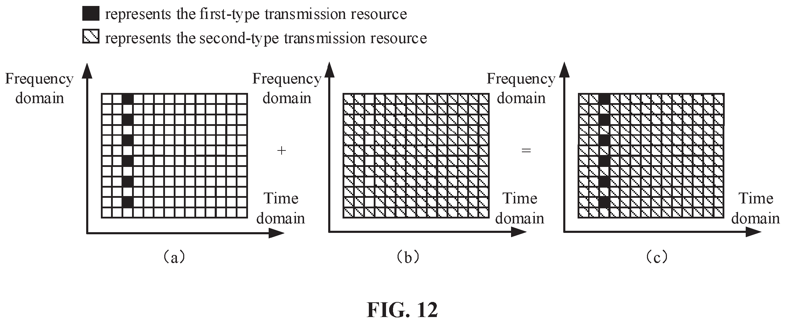

In order to facilitate understanding, the first-type reference signals and the second-type reference signals of the embodiments of the present disclosure will be described below with reference to FIG. 11. It is assumed that the first transmission resource is an RB, as illustrated in (a) of FIG. 11, 12 REs in the RB to transmit the first-type reference signals, and channel estimation accuracy of a certain degree of accuracy can be achieved. As illustrated in (b) of FIG. 11, all the REs in the RB are used for transmitting the second-type reference signals, so all the REs in the RB may be used for transmitting the data signals. In this way, the transmission overhead of the reference signals is minimized in this transmission mode. Referring to (c) of FIG. 11, the RB may include 6 REs for transmitting the first-type reference signals, and the remaining REs may be used for transmitting the second-type reference signals. Compared with the RB illustrated in (a) of FIG. 11, the RB illustrated in (c) of FIG. 11 reduces the transmission resources for transmitting the first-type reference signals, but introduces more transmission resources for the second-type reference signals, so that channel estimation performance similar to that of the RB illustrated in (a) of FIG. 11 can be realized. Compared with the RB illustrated in (b) of FIG. 11, although the overhead of transmitting the reference signals may be slightly increased by introducing the transmission resources for transmitting the first-type reference signals into the RB illustrated in (c) of FIG. 11, the introduction of the first-type reference signals helps to overcome the problems of insufficient generalization capability and unstable inference performance based on the AI channel estimation algorithm, so as to obtain more reliable and stable channel estimation performance.

In some implementations, the transmission resources that are available to transmit the first-type reference signals are the first-type transmission resources, and the first-type transmission resources are not available to transmit other signals except for the first-type reference signals. For example, within the same cell, the first-type transmission resources are not available to transmit other signals except for the first-type reference signals. For another example, the first-type reference signals may be reference signals transmitted in an orthogonal transmission manner.

For the terminal device, in some implementations, the terminal device may transmit only the first-type reference signals on the first-type transmission resources. In other words, the terminal device does not transmit other signals except for the first-type reference signals on the first-type transmission resources. In other implementations, the terminal device may only receive the first-type reference signals on the first-type transmission resources. In other words, the terminal device does not receive other signals except for the first-type reference signals on the first-type transmission resources.

In some implementations, the transmission resources that are available to transmit the second-type reference signals are the second-type transmission resources, and the second-type transmission resources are available to transmit other signals except for the second-type reference signals. For example, within the same cell, the second-type transmission resources may be used to transmit other signals except for the second-type reference signals. For another example, the second-type reference signals may be reference signals transmitted in a non-orthogonal transmission manner.

For the terminal device, in some implementations, the terminal device may occupy a part or all of the second-type transmission resources to send the second-type reference signals and other signals except for the second-type reference signals to the network device. In other implementations, the terminal device receives the second-type reference signals and other signals except for the second-type reference signals sent by the network device on a part or all of the second-type transmission resources.

Taking the first transmission resource as the first resource set as an example, in some implementations, the second-type transmission resources are all transmission resources of the remaining transmission resources in the first resource set except for the first-type transmission resources.

Hereinafter, the arrangement of the first-type transmission resources and the second-type transmission resources in the embodiments of the present disclosure will be described with reference to (a) to (c) in FIG. 12. It is assumed that the first resource set is an RB, the index of each symbol in the RB is incrementally numbered from 0 in the order from earlier to later in the time domain, and the index of each subcarrier in the RB is incrementally numbered from 0 in the order from low to high in the frequency domain.

Referring to FIG. (a), the first-type transmission resources in the RB, that is, the first-type transmission resources, are located within symbol 2 in the RB, and the first-type transmission resources are discretely arranged at an interval of one subcarrier within symbol 2. FIG. (b) illustrates the second-type transmission resources in the RB, that is, the second-type transmission resources are other transmission resources of the RB except for the first-type transmission resources. Therefore, the first resource set including the first-type transmission resources and the second-type transmission resources as illustrated in FIG. (c) may be obtained by combining the first-type transmission resources illustrated in FIG. (a) and the second-type transmission resources illustrated in FIG. (b).

Accordingly, in the first resource set, the first-type transmission resources may be occupied to transmit the first-type reference signals, and the second-type transmission resources may be occupied to transmit the second-type reference signals. In addition, a part or all of the second-type transmission resources may be used for transmitting data signals.

In other implementations, the second-type transmission resources are a part of transmission resources of the remaining transmission resources in the first-type resource set except for the first-type transmission resources. Hereinafter, the arrangement of the first-type transmission resources and the second-type transmission resources in the embodiments of the present disclosure will be described with reference to Example 1 and Example 2.

**Example 1:** The time domain positions of the first-type transmission resources are the same as the time domain positions of the second-type transmission resources.

That is, the time domain positions of the first-type transmission resources are the same as the time domain positions of the second-type transmission resources, and the frequency domain positions of the first-type transmission resources are different from the frequency domain positions of the second-type transmission resources. That is, the first-type transmission resources and the second-type transmission resources are located in different frequency bands within the same time domain positions.

In the embodiments of the present disclosure, the first-type transmission resources and the second-type transmission resources are set in different frequency domain resources in the same time domain position to improve the density of the reference signals in the frequency domain. Such a setting method may be applied to a channel environment with high frequency selectivity. Generally, the channel environment changes greatly with a change in frequency in a channel environment with high frequency selectivity, so the accuracy of channel estimation can be improved by increasing the density of the reference signals in the frequency domain.

In some implementations, the time domain positions of the first-type transmission resources are the same as the time domain positions of the second-type transmission resources, and within the time domain positions, the frequency domain positions of the second-type transmission resources are all frequency domain positions except for the frequency domain positions of the first-type transmission resources.

In other implementations, the time domain positions of the first-type transmission resources are the same as the time domain positions of the second-type transmission resources, and within the time domain positions, the frequency domain positions of the second-type transmission resources are a part of frequency domain positions except for the frequency domain positions of the first-type transmission resources.

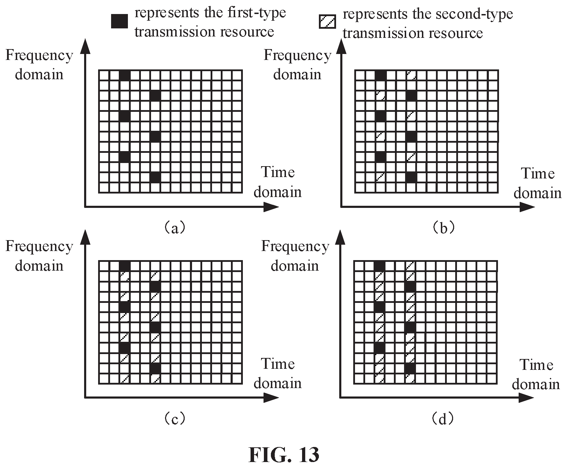

Hereinafter, the arrangement manner of the first-type transmission resources and the second-type transmission resources in the embodiments of the present disclosure will be described with reference to (a) to (d) in FIG. 13. It is assumed that the first resource set is an RB, the index of each symbol in the RB is incrementally numbered from 0 in the order from earlier to later in the time domain, and the index of each subcarrier in the RB is incrementally numbered from 0 in the order from low to high in the frequency domain.

Referring to FIG. (a), in the RB, the first-type transmission resources are located within symbol 2 and symbol 5 in the RB, and the first-type transmission resources are discretely arranged at an interval of 3 subcarriers within the symbols. The first-type transmission resource having the lowest frequency position in symbol 2 corresponds to subcarrier 3, and the first-type transmission resource having the lowest frequency position in symbol 5 corresponds to subcarrier 1. In this case, the frequency domain density of the reference signals on each symbol in the RB is 1/4, that is, the first-type reference signals are transmitted on 1/4 of the subcarriers in one symbol.

Referring to FIG. (b), the second-type transmission resources are introduced on the basis of the first-type transmission resources illustrated in FIG. (a). That is, in symbol 2 and symbol 5, one subcarrier is spaced between the frequency domain positions occupied by the second-type transmission resources and the frequency domain positions occupied by the first-type transmission resources. In this case, the frequency domain density of the reference signals on each symbol in the RB is 2/4, that is, the reference signals (including the first-type reference signals and the second-type reference signals) are transmitted on 2/4 of the subcarriers in one symbol.

Referring to FIG. (c), the second-type transmission resources are introduced on the basis of the first-type transmission resources illustrated in FIG. (a). That is, in symbol 2 and symbol 5, the frequency domain resources that may be occupied by the second-type transmission resources include subcarrier 0, subcarrier 2, subcarrier 4, subcarrier 6, subcarrier 8, and subcarrier 10. In this case, the frequency domain density of the reference signals on each symbol in the RB is 3/4, that is, the reference signals (including the first-type reference signals and the second-type reference signals) are transmitted on 3/4 of the subcarriers in one symbol.

Referring to FIG. (d), the second-type transmission resources are introduced on the basis of the first-type transmission resources illustrated in FIG. (a). That is, in symbol 2 and symbol 5, the frequency domain resources that may be occupied by the second-type transmission resources are all other frequency domain resources except for the first-type transmission resources. In this case, the frequency domain density of the reference signals on each symbol in the RB is 4/4, that is, the reference signals (including the first-type reference signals and the second-type reference signals) are transmitted on all subcarriers in one symbol.

**Example 2:** A part or all of the frequency domain positions of the first-type transmission resources are the same as the frequency domain positions of the second-type transmission resources.

That is, a part or all of the frequency domain positions of the first-type transmission resources are the same as the frequency domain positions of the second-type transmission resources, and the time domain positions of the first-type transmission resources are different from the time domain positions of the second-type transmission resources. That is, the first-type transmission resources and the second-type transmission resources are located in different time domain resources within the same frequency domain resources.

In the embodiments of the present disclosure, the first-type transmission resources and the second-type transmission resources are set with different time domain resources at a certain frequency domain position, so as to improve the density of reference signals in the time domain. Such a setting method may be applied to a channel environment with large time variation (for example, a scenario where the terminal device moves). Generally, the channel environment changes greatly with a change in time in a channel environment with large time variation, so the accuracy of channel estimation can be improved by increasing the density of the reference signals in the time domain.

In some implementations, in a part of frequency domain positions of the first-type transmission resources, the time domain positions of the second-type transmission resources are all time domain positions except for the time domain positions of the first-type transmission resources.

In other implementations, in a part of frequency domain positions of the first-type transmission resources, the time domain positions of the second-type transmission resources are a part of time domain positions except for the time domain positions of the first-type transmission resources.

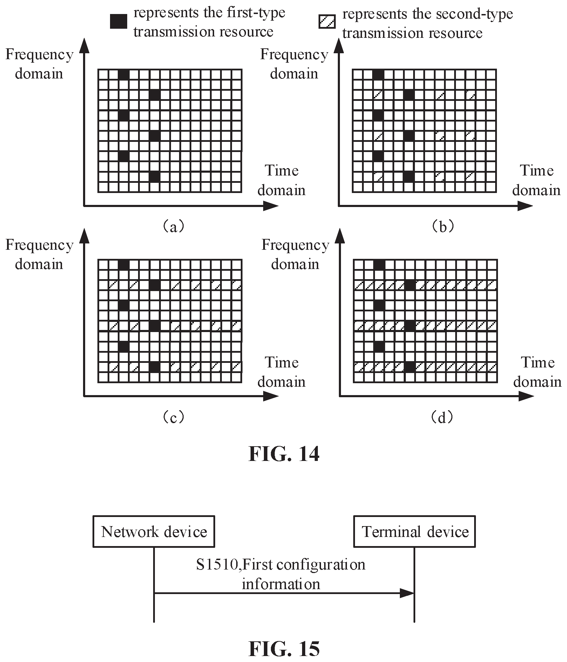

Hereinafter, the arrangement of the first-type transmission resources and the second-type transmission resources in another embodiment of the present disclosure is described with reference to (a) to 14 (d) in FIG. 14. It is assumed that the first resource set is an RB, the index of each symbol in the RB is incrementally numbered from 0 in the order from earlier to later in the time domain, and the index of each subcarrier in the RB is incrementally numbered from 0 in the order from low to high in the frequency domain.

Referring to FIG. (a), in the RB, the first-type transmission resources are located within symbol 2 and symbol 5 in the RB, and the first-type transmission resources are discretely arranged at an interval of 3 subcarriers within the symbols. The first-type transmission resource having the lowest frequency position in symbol 2 corresponds to subcarrier 3, and the first-type transmission resource having the lowest frequency position in symbol 5 corresponds to subcarrier 1. In this case, the time domain density of the reference signals on each subcarrier in the RB is 1/14, that is, the first-type reference signals are transmitted on 1/14 of symbols in one subcarrier.

Referring to FIG. (b), the second-type transmission resources are introduced on the basis of the first-type transmission resources illustrated in FIG. (a). That is, in the subcarrier 1, the subcarrier 5, and the subcarrier 9, the transmission resources of the reference signals are separated by two symbols. In this case, the time domain density of the reference signals on each subcarrier in the RB is 4/14, that is, the reference signals (including the first-type reference signals and the second-type reference signals) are transmitted on 4/14 of symbols in one subcarrier.

Referring to FIG. (c), the second-type transmission resources are introduced on the basis of the first-type transmission resources illustrated in FIG. (a). That is, in the subcarrier 1, the subcarrier 5, and the subcarrier 9, the transmission resources of the reference signals are separated by one symbol. In this case, the time domain density of the reference signals on each subcarrier in the RB is 7/14, that is, the reference signals (including the first-type reference signals and the second-type reference signals) are transmitted on 7/14 of symbols in one subcarrier.

Referring to FIG. (d), the second-type transmission resources are introduced on the basis of the first-type transmission resources illustrated in FIG. (a). That is, in the subcarrier 1, the subcarrier 5, and the subcarrier 9, other transmission resources except for the first type transmission resources are the second-type transmission resources. In this case, the time domain density of the reference signals on each subcarrier in the RB is 14/14, that is, the reference signals (including the first-type reference signals and the second-type reference signals) are transmitted on 14/14 of symbols in one subcarrier.

As described above, the overhead of transmitting the reference signals and the accuracy of channel estimation can be balanced by introducing the first-type reference signals and the second-type reference signals. However, in such a scenario, the terminal device cannot determine how the first-type reference signals and the second-type reference signals are transmitted, which may result in the first-type reference signals and the second-type reference signals not being correctly received.

Therefore, in view of the above problems, the embodiments of the present disclosure provide a method for transmitting reference signals, in which a network device may configure the first-type reference signals and the second-type reference signals for a terminal device, and thus, it is helpful to improve the possibility that the terminal device correctly receives the first reference signals and the second reference signals. Hereinafter, the method for transmitting the reference signals according to the embodiments of the present disclosure will be described with reference to FIG. 15. The method illustrated in FIG. 15 includes the operation S1510.

In operation S1510, the network device sends first configuration information to a terminal device. The first configuration information is used for configuring reference signals.

In some implementations, the reference signals include the first-type reference signals and the second-type reference signals. Therefore, the reference signals may also be referred to as "combined reference signals".

In some implementations, the first configuration information is used for configuring the reference signals, which may be understood to be that the first configuration information may be used for configuring the first-type reference signals and the second-type reference signals. That is, the first configuration information may include configuration information (also referred to as "configuration information 1") of the first-type reference signals and configuration information (also referred to as "configuration information 2") of the second-type reference signals. For example, the first configuration information may be expressed as {configuration information 1; configuration information 2}. In this case, the configuration information 1 may be the same as the configuration information 2, or the configuration information 1 may be different from the configuration information 2. Of course, in the embodiments of the present disclosure, the first-type reference signals and the second-type reference signals may share the first configuration information. In this case, it is not necessary to distinguish between the configuration information of the first-type reference signals and the configuration information of the second-type reference signals in the first configuration information. For convenience of description, when describing the first configuration information applicable to the embodiments of the present disclosure below, it is not distinguished whether it is configuration information of the first-type reference signals or configuration information of the second-type reference signals.

In the embodiments of the present disclosure, the manner for carrying the first configuration is not limited. In some implementations, the first configuration information may be carried on one or more of following: RRC configuration information, DCI, or MAC CE.

In some implementations, the first configuration information is used to indicate one or more of following: power information of the reference signals; transmission resources for transmitting the reference signals; model information of the first model for receiving the reference signals; or whether the transmission resources for transmitting the reference signals are available for transmitting the other signals.

Taking the first configuration information being used to indicate the power information of the reference signals, the power information of the reference signals may include transmission power information of the reference signals. The transmission power information of the reference signals may include one or more of the following: maximum transmission power information of the reference signals, average transmission power information of the reference signals, or actual transmission powers of the reference signals.

In some implementations, the first configuration information may directly carry power information of the reference signals. For example, the first configuration information may carry a power of the reference signals of 4.9 dBm. In other implementations, the first configuration information may carry the first information for determining powers of the reference signals.

In some implementations, the first information may include power scaling factors of the reference signals. The power scaling factor may be used to amplify or reduce the powers of the reference signals.

In some implementations, the first information may include first ratio information. The first ratio information is ratios of an energy per resource element (EPRE) corresponding to the first channel to EPREs of the reference signals. The first channel is a channel for transmitting the reference signals.

In some implementations, the powers of the reference signals may be determined based on the first ratio information and the power of the first channel. For example, the first ratio information may be expressed as $\frac{{EPRE}_{RS}}{{EPRE}_{CH}}$, the power of the first channel may be expressed as *P_{CH}.* In this case, the powers *P_{RS}* of the reference signals may be determined based on the formula: ${P}_{RS} = \left(\frac{{EPRE}_{RS}}{{EPRE}_{CH}}\right) \times {P}_{CH}$*.*

In some implementations, the first information may include second ratio information. The second ratio information is ratios of powers of the reference signals to a total power corresponding to a resource set. In other words, the second ratio information may be a ratio of the power of the reference signal in the total power corresponding to the resource set. The resource set includes the transmission resources for transmitting the reference signals.

For example, the resource set may be an RB, and RE1 in the RB is used for transmitting a reference signal. In this case, the second ratio information may be a ratio of a power for transmitting a reference signal in RE1 to a total power for transmitting signals in the RB.

Of course, the first information is not limited in the embodiments of the present disclosure. In some implementations, the above first information may be ratios of the powers of the reference signals to a total power corresponding to other channel. The other channel may be other channel except for the channel for transmitting the reference signals. In other implementations, the first information may also be a ratio of the power of the reference signal and the power of other signal. The reference signal may be other signal other than the reference signal. In other implementations, the first information may further include a correspondence relationship between respective transmission resources in a resource set and powers. The resource set may include transmission resources for transmitting the reference signals. In other implementations, the other signal and the reference signals may be transmitted through the channel 1, and the above first information may be a ratio 1 of the power of the other signal and the total power corresponding to the other channel. Accordingly, determining the power of the reference signal based on the first information may include determining, based on the ratio 1, a ratio 2 of the power of the reference signal to the total power corresponding to the other channel. The sum of the ratio 2 and the ratio 1 may be 1, and then the power of the reference signal may be determined based on the ratio 2.

The implementation method of the first information in the embodiments of the present disclosure has been described above. In some implementation manners, the respective implementation manners of the first information may be used separately. In other implementations, respective implementation manners of the first information may be used in combination with each other. For example, the first information may include the first ratio information and the power scaling factors, and thus, on the basis of determining the power information of the reference signals based on the first ratio information, the transmission powers of the reference signals may be adjusted based on the power scaling factor, which helps to improve the flexibility of determining powers of the reference signals. For another example, the first information may include the second ratio information and the power scaling factor, and thus, on the basis of determining the power information of the reference signals based on the second ratio information, the transmission powers of the reference signals may be adjusted based on the power scaling factor, which helps to improve the flexibility of determining powers of the reference signals.

**Taking the first configuration information for indicating the transmission resources for transmitting the reference signals as an example,** in some implementations, the transmission resources include one or more of following: time domain resources, frequency domain resources or spatial domain resources.

In the embodiments of the present disclosure, the time domain resources are not limited. In some implementations, the time domain unit corresponding to the time domain resource may be a certain time domain unit introduced in the known communication system. For example, the time domain resources may be one of following: symbols, slots, Mini-slots, subframes, or frames. Of course, in the embodiments of the present disclosure, the time domain resources may also be time domain units introduced for future communication.

In the embodiments of the present disclosure, the frequency domain resources are not limited. In some implementations, the frequency domain unit corresponding to the frequency domain resource may be a certain frequency domain unit introduced in the known communication system. For example, the frequency domain resources may be one of following: subcarriers, frequency bands, or bandwidth parts (BWP). Of course, in the embodiments of the present disclosure, the time domain resources may also be frequency domain units introduced for future communication.

In the embodiments of the present disclosure, the spatial domain resources are not limited. In some implementations, the frequency domain unit corresponding to the spatial domain resource may be a spatial domain resource introduced in the known communication system. For example, the spatial domain resources may include codebook information. Of course, in the embodiments of the present disclosure, the time domain resources may also be spatial domain resources introduced for future communication.

**Taking the first configuration information for indicating the model information of the first model as an example,** the model information of the first model includes a model function of the first model and/or a model identifier of the first model.

In some implementations, the first model may be associated with the reference signals, for example, the first model may be used to receive the reference signals. As another example, the first model may be used to generate the reference signals. Taking the reference signals including the second-type reference signals as an example, the first model is used to generate the reference signals, which may be understand to be that the first model is used to superimpose the second-type reference signals with other signals (for example, data signals). Taking the reference signals including the second-type reference signals as an example, the first model is used to receive the reference signals, which may be understood to be that the first model is used for performing channel estimation based on the second-type reference signals and receiving other signals (for example, data signals) based on the result of the channel estimation.

In the embodiments of the present disclosure, the first configuration information may configure the first model associated with the reference signals, which is helpful to improve the possibility that the reference signals are correctly transmitted.

In some implementations, the first configuration information may indicate a model function of the first model by carrying a model function identifier of the first model.

In some implementations, after the first configuration information indicates the model function of the first model, the terminal device may select the first model based on the model function of the first model to receive or send the reference signals.

In the embodiments of the present disclosure, the model function of the first model is not limited. For example, the model function of the first model may include superimposing the second-type reference signals and other signals (for example, in combination with the superposition scheme illustrated in FIG. 10) to achieve non-orthogonal transmission of the second-type reference signals and other signals. For another example, the model function of the first model may include receiving signals that are transmitted non-orthogonally.

In some implementations, the first configuration information is used to indicate model information of the first model, the first model belongs to one of multiple models, and configuration information of reference signals corresponding to different models of the multiple models are different.

In some implementations, if the configuration information of the reference signals is used to indicate the transmission resources (that is, the second-type transmission resources) of the second-type reference signals, the numbers of the second-type transmission resources in the transmission resource sets corresponding to different models of the multiple models are different.

Taking the first model being used for receiving the reference signals as an example, generally, the more the number of transmission resources occupied by the second-type reference signals in the transmission resource set is, the higher the complexity of correctly receiving the reference signals is. On the contrary, the less the number of transmission resources occupied by the second-type reference signals in the transmission resource set is, the lower the complexity of correctly receiving the reference signals is. In this scenario, in order to improve the accuracy of channel estimation based on the reference signals, different models may be set to receive the second-type reference signals. That is, the numbers of transmission resources occupied by the second-type reference signals in the transmission resource sets corresponding to different models of the multiple models are different. For scenarios where the number of transmission resources occupied by the second-type reference signals in the transmission resource set is less, a model with lower complexity may be used for channel estimation to save the time required for model reasoning. For scenarios where the number of transmission resources occupied by the second-type reference signals in the transmission resource set is greater, a model with higher complexity may be used for channel estimation to improve the accuracy of channel estimation.

In another embodiment, if the configuration information of the reference signals is used to indicate the transmission resources (that is, the first-type transmission resources) of the first-type reference signals, the numbers of the first-type transmission resources in the transmission resource sets corresponding to different models of the multiple models are different.

Taking the first model being used for receiving the reference signals as an example, generally, the more the number of transmission resources occupied by the first-type reference signals in the transmission resource set is, the lower the complexity of correctly receiving the reference signals is. On the contrary, the less the number of transmission resources occupied by the first-type reference signals in the transmission resource set is, the lower the complexity of correctly receiving the reference signals is. In this scenario, in order to improve the accuracy of channel estimation based on the reference signals, different models may be set to receive the first-type reference signals. That is, the numbers of transmission resources occupied by the first-type reference signals in the transmission resource sets corresponding to different models of the multiple models are different. For scenarios where the number of transmission resources occupied by the first-type reference signals in the transmission resource set is greater, a model with lower complexity may be used for channel estimation to save the time required for model reasoning. For scenarios where the number of transmission resources occupied by the first-type reference signals in the transmission resource set is less, a model with higher complexity may be used for channel estimation to improve the accuracy of channel estimation.

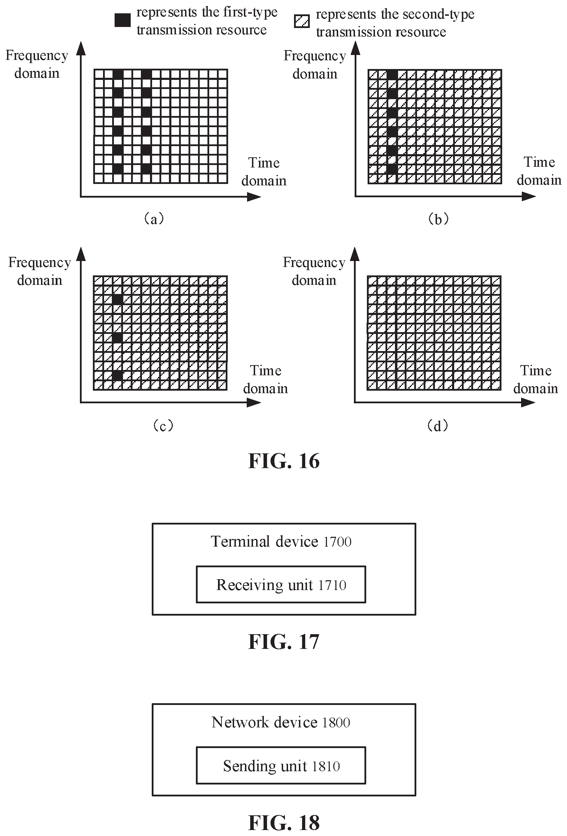

As described above, there is a correspondence relationship between the model and the configuration information of the reference signals, which is described below in combination with Table 1 and Table 2. Table 1 shows the correspondence relationship between the model identifier and the configuration information of the reference signals in the embodiments of the present disclosure. Hereinafter, reference signal patterns applicable to both Table 1 and Table 2 will be described with reference to (a) to (d) in FIG. 16.

Referring to FIG. (a), for a reference signal pattern having a pattern index of 00, the pattern indicates that 12 first-type transmission resources are included in the RB, and the second-type transmission resources are not included. In the four types of reference signal patterns illustrated in FIG. 16, the transmission overhead of the reference signals is the largest.

As illustrated in FIG. (b), for a reference signal pattern having a pattern index of 01, the pattern indicates that 6 first-type transmission resources are included in the RB, and the remaining REs are all second-type transmission resources. The transmission overhead of the reference signals of such a reference signal pattern is reduced by half as compared to the reference signal pattern having a pattern index of 00.

As illustrated in FIG. (c), for a reference signal pattern having a pattern index of 10, the pattern indicates that 3 first-type transmission resources are included in the RB, and the remaining REs are all second-type transmission resources. The transmission overhead of the reference signals of such a reference signal pattern is 1/4 of the transmission overhead of the reference signals of the reference signal pattern illustrated in FIG. (a).

Referring to FIG. (d), for a reference signal pattern having a pattern index of 11, the pattern indicates that all REs in the RB are the second-type transmission resources, and the RB does not include the first-type transmission resources. Since other reference signals except for the second-type reference signals may be transmitted on the second-type transmission resources, the transmission overhead of the reference signals in this reference signal pattern is 0.

As shown in Table 1, for the reference signal pattern having a pattern index of 00, the model identifier corresponding to the pattern is 00. For the reference signal pattern having a pattern index of 01, the model identifier corresponding to the pattern is 01. For the reference signal pattern having a pattern index of 10, the model identifier corresponding to the pattern is 10. For the reference signal pattern having a pattern index of 11, the model identifier corresponding to the pattern is 11.

**Table 1**

| **Pattern index** | **Reference signal pattern** | **Model Identifier** |
|---|---|---|
| 00 | The RB includes 12 first-type transmission resources and does not include second-type transmission resources | 00 |
| 01 | The RB includes 6 first-type transmission resources, and the remaining REs are all second-type transmission resources | 01 |
| 10 | The RB includes 3 first-type transmission resources, and the remaining REs are all second-type transmission resources | 10 |
| 11 | All REs in the RB are second-type transmission resources and the first-type transmission resources are not included | 11 |

Accordingly, if the first configuration information indicates that the pattern index of the reference signals is 00, the first configuration information may further carry the model identifier 00 corresponding to the pattern index. If the first configuration information indicates that the pattern index of the reference signals is 01, the first configuration information may further carry the model identifier 01 corresponding to the pattern index. If the first configuration information indicates that the pattern index of the reference signals is 10, the first configuration information may further carry the model identifier 10 corresponding to the pattern index. If the first configuration information indicates that the pattern index of the reference signals is 11, the first configuration information may further carry the model identifier 11 corresponding to the pattern index.

Table 2 shows the correspondence relationship between the model function and the configuration information of the reference signals in the embodiments of the present disclosure. As shown in Table 2, for the reference signal pattern having a pattern index of 00, the model function corresponding to the pattern may be non-AI channel estimation. That is, in this case, a conventional channel estimation solution may be used. For the reference signal pattern having a pattern index of 01, the model function corresponding to the pattern is to realize channel estimation based on the combined reference signals. For the reference signal pattern having a pattern index of 10, the model function corresponding to the pattern is to realize channel estimation based on the combined reference signals. For the reference signal pattern having a pattern index of 11, the model function corresponding to the pattern is to realize channel estimation based on non-orthogonal reference signals.

**Table 2**

| **Pattern index** | **Reference signal pattern** | **Model functionality** |
|---|---|---|
| 00 | The RB includes 12 first-type transmission resources and does not include second-type transmission resources | Non-AI channel estimation |
| 01 | The RB includes 6 first-type transmission resources, and the remaining REs are all second-type transmission resources | Channel estimation based on combined reference signals |
| 10 | The RB includes 3 first-type transmission resources, and the remaining REs are all second-type transmission resources | Channel estimation based on combined reference signals |
| 11 | All REs in the RB are second-type transmission resources, and first-type transmission resources are not included | Channel estimation based on non-orthogonal reference signals |

In some implementations, the first configuration information is carried in the first message, the first message carries multiple pieces of configuration information for configuring the reference signals, and the multiple pieces of configuration information include the first configuration information.

In the embodiments of the present disclosure, the content of the first message is not limited. In some implementations, the first message may carry indication information of multiple pieces of configuration information and corresponding configuration information. For example, the first message may carry multiple patterns of reference signals configured by the multiple pieces of configuration information, and pattern indexes. In another embodiment, the reference signals may include the first-type reference signals and the second-type reference signals, and each of the multiple pieces of configuration information may include configuration information of the first-type reference signals and configuration information of the second-type reference signals. In this case, each of the multiple pieces of configuration information may be referred to as combined configuration information. Accordingly, the first message may carry configuration content of the combined configuration information and an identifier of the combined configuration information.

In some implementations, the method further includes the following operation.

The network device sends the first indication information to the terminal device. The first indication information is used to activate the first configuration information. The first indication information may indicate activation of the first configuration information among the multiple pieces of configuration information.

In the embodiments of the present disclosure, the content of the first indication information is not limited. In some implementations, the first indication information may carry indication information of the first configuration information. For example, the first configuration information is used to configure a pattern of the reference signals. Accordingly, the indication information of the first configuration information may be a pattern index. In another embodiment, the reference signals may include the first-type reference signals and the second-type reference signals, and then the first configuration information may include configuration information of the first-type reference signals and configuration information of the second-type reference signals. In this case, the first configuration information may be referred to as combined configuration information. Accordingly, the first indication information may carry an identifier of the combined configuration information.

In the embodiments of the present disclosure, the network device may configure multiple pieces of configuration information for the terminal device through the first message, and then the network device may instruct the terminal device to activate one of the multiple pieces of configuration information through the first indication information. Since the network device may configure multiple pieces of configuration information for the terminal device at a time, subsequently, the network device may only indicate the activated configuration information through the first indication information. In this case, the first indication information may no longer carry specific configuration information, which is helpful to reduce the overhead of transmitting the first indication information.

In the embodiments of the present disclosure, the manner of carrying the first indication information is not limited. In some implementations, the first indication information is carried in one or more of following: downlink control information (DCI); media access control control element (MAC CE), or radio resource control (RRC) message.

In some implementations, a duration for the terminal device to transmit the reference signals based on the first configuration information may be determined based on the first timer. That is, the method further includes the following operations. In response to receiving the first configuration information, the terminal device starts the first timer. During operation of the first timer, the terminal device uses the first configuration information.

In some implementations, the terminal device using the first configuration information may include one or more of the following: the terminal device transmitting the reference signals based on the first configuration information; the terminal device receiving the reference signals based on the first configuration information; the terminal device receiving reference signals based on model information of the first model indicated by the first configuration information; or the terminal device transmitting the reference signals based on the model information of the first model indicated by the first configuration information.

In some implementations, the first timer may further be a countdown timer. Accordingly, the method includes the following operations. In response to receiving the first configuration information, the terminal device starts the countdown timer. The terminal device uses the first configuration information during operation of the countdown timer.

In some implementations, if the first timer expires, the terminal device uses the second configuration information. The second configuration information is used for configuring the third reference signals. The reference signals configured by the first configuration information are different from the third reference signals. Taking the first timer as a countdown as an example, the expiring of the first timer may include decrementing the count of the first countdown timer to 0.

In some implementations, the transmission overhead of the third reference signals is greater than the transmission overhead of the reference signals configured by the first configuration information. In other words, the number of the first-type reference signals in the third reference signals is greater than the number of first-type reference signals in the reference signals configured by the first configuration information. For example, the number of orthogonally transmitted reference signals in the third reference signals is greater than the number of orthogonally transmitted reference signals in the reference signals configured by the first configuration information.

In some scenarios, since the transmission overhead of the third reference signals is greater than the transmission overhead of the reference signals configured by the first configuration information. Therefore, switching from the first configuration information to the second configuration information may be referred to as a fallback of the reference signal configuration information. Taking the first configuration information and the second configuration information being used to configure the pattern of the reference signals as an example, switching from the first configuration information to the second configuration information may be referred to as a fallback of the reference signal pattern.

In the embodiments of the present disclosure, the third reference signals are not specifically limited. In some implementations, the third reference signals satisfy one of following: the third reference signals include only the first-type reference signals; or the third reference signals include the first-type reference signals and the second-type reference signals.

Taking the third reference signals including only the first-type reference signals as an example, the first-type reference signals may be reference signals that are transmitted non-orthogonally. In this case, the third reference signals include only the reference signals that are transmitted non-orthogonally.

For example, the pattern of the reference signals configured by the first configuration information is as illustrated in (c) of FIG. 11, and the third reference signals configured by the second configuration information include only the first-type reference signals (for example, as illustrated in (a) of FIG. 11). When the first timer expires, the terminal device may switch from the first configuration information to the second configuration information. At this time, the terminal device may receive or send the reference signals based on the second configuration information.

For another example, the pattern of the reference signals configured by the first configuration information is as illustrated in (c) of FIG. 16, and the pattern of the reference signals configured by the second configuration information is as illustrated in (b) of FIG. 16. When the first timer expires, the terminal device may switch from the first configuration information to the second configuration information. At this time, the terminal device may receive or send the reference signals based on the second configuration information.

The above describes the process of switching configuration information by the terminal device in combination with the first timer. In some scenarios, after the terminal device switches to the second configuration information, in order to ensure that the network device can receive or send the third reference signals, the network device also needs to maintain a similar timer.

For example, after the terminal device switches to the second configuration information and prepares to transmit the third reference signals to the network device based on the second configuration information. At this time, in order to correctly receive the third reference signals, the network device also needs to switch to the second configuration information and receives the third reference signals based on the second configuration information.

For another example, after the terminal device switches to the second configuration information, the terminal device prepares to receive the third reference signals sent by the network device based on the second configuration information. At this time, the network device also needs to switch to the second configuration information and sends the third reference signal based on the second configuration information.

Thus, in some implementations, the above method further includes the following operations. In response to sending the first configuration information, the network device starts the first timer. The network device uses the first configuration information during operation of the first timer.

In some implementations, the above method further includes the following operation. The network device uses the second configuration information in response to expiring of the first timer.

It should be noted that the procedure of the network device using the second configuration information is opposite to the procedure of the terminal device using the second configuration information. For example, if the terminal device sends the third reference signals by using the second configuration information, the network device accordingly receives the third reference signals by using the second configuration information. For another example, if the terminal device receives the third reference signals by using the second configuration information, the network device accordingly sends the third reference signals by using the second configuration information.

In addition, the reference of the description of the first timer and the third reference signals may be made to the above description, which will not be repeated here for the sake of brevity.

In some implementations, if the third reference signals include the first-type reference signals and the second-type reference signals, the third reference signals may be associated with the second model. The second model may be different from the first model. In this case, if the terminal device switches to the second configuration information, the terminal device may switch from the first model to the second model. The second model may be indicated by the second configuration information.

It should be noted that when the third reference signals includes only the first-type reference signals, sending and/or reception of the third reference signals may not be performed based on the second model. For example, the third reference signals may be received according to a conventional method for receiving the reference signals, and/or the third reference signals may be sent according to a conventional method for sending the reference signals. That is, the second configuration information may not indicate the second model, or the model information of the second model indicated by the second configuration information may be the default.

With the increasing types of communication devices in communication systems, the capabilities of different types of terminal devices are different. For example, a terminal device having a low capability may not support the above reception or sending of the reference signals. In this case, if the network device still sends the first configuration information to the terminal device, unnecessary transmission of the first configuration information will be caused, and transmission resources of the first information will be wasted.

Therefore, in view of the above problem, the embodiments of the present disclosure provide a solution for sending capability information. In some implementations, the terminal device sends capability information to the network device.

In some implementations, the above capability information is used to indicate one or more of following: whether the terminal device supports receiving the reference signals; whether the terminal device supports sending the reference signals; or whether the terminal device supports receiving the reference signals based on the first model.

Taking the capability information being used to indicate whether the terminal device supports receiving the reference signals, the capability information is used to indicate whether the terminal device instructs to send the first-type reference signals and the second-type reference signals. In other words, the capability information is used to indicate whether the terminal device instructs to send the combined reference signals.

In some implementations, the indicating whether the terminal device supports receiving the reference signals may occupy one bit in the capability information. If the value of the bit is the first value, it indicates that the terminal device supports receiving the reference signals. If the value of the bit is the second value, it indicates that the terminal device does not support receiving the reference signals. The first value is different from the second value. For example, the first value may be 1 and the second value may be 0. For another example, the first value may be 0, and the second value may be 1.

Taking the capability information being used to indicate whether the terminal device supports sending the reference signals, the capability information is used to indicate whether the terminal device instructs to send the first-type reference signals and the second-type reference signals. In other words, the capability information is used to indicate whether the terminal device instructs to send the combined reference signals.

In some implementations, the indicating whether the terminal device supports sending the reference signals may occupy one bit in the capability information. If the value of the bit is the first value, it represents that the terminal device supports sending the reference signals. If the value of the bit is the second value, it represents that the terminal device does not support sending the reference signals. The first value is different from the second value. For example, the first value may be 1 and the second value may be 0. For another example, the first value may be 0, and the second value may be 1.

Taking the capability information being used to indicate whether the terminal device supports receiving the reference signals based on the first model as an example, in some implementations, the above information indicating whether the terminal device supports receiving the reference signals based on the first model may occupy one bit in the capability information. If the value of the bit is the first value, it represents the information that the terminal device supports receiving the reference signals based on the first model. If the value of the bit is the second value, it represents the information that the terminal device does not support receiving the reference signals based on the first model. The first value is different from the second value. For example, the first value may be 1 and the second value may be 0. For another example, the first value may be 0, and the second value may be 1.

Of course, in the embodiment of the present disclosure, taking the capability information being used to indicate whether the terminal device supports sending the reference signals based on the first model as an example, in some implementations, the above information indicating whether the terminal device supports sending the reference signals based on the first model may occupy one bit in the capability information. If the value of the bit is the first value, it represents the information that the terminal device supports sending the reference signals based on the first model. If the value of the bit is the second value, it represents the information that the terminal device does not support sending the reference signals based on the first model. The first value is different from the second value. For example, the first value may be 1 and the second value may be 0. For another example, the first value may be 0, and the second value may be 1.

Hereinafter, the embodiments of the method of the present disclosure are described in detail with reference to FIG. 1 to FIG. 16, and embodiments of the apparatus of the present disclosure are described in detail with reference to FIG. 17 to FIG. 19. It should be understood that the description of the method embodiments and the description of the apparatus embodiments correspond to each other. Therefore, the portions not described in detail may be referred to the foregoing method embodiments.

FIG. 17 is a schematic diagram of a terminal device according to the embodiments of the present disclosure. The terminal device 1700 illustrated in FIG. 17 includes a receiving unit 1710.

The receiving unit 1710 is configured to receive first configuration information sent by a network device. The first configuration information is used for configuring reference signals. The reference signals include the first-type reference signals and the second-type reference signals, transmission resources that are available to transmit the first-type reference signals are first-type transmission resources, and transmission resources that are available to transmit the second-type reference signals are second-type transmission resources. The first-type transmission resources are not available to transmit other signals except for the first-type reference signals, and the second-type transmission resources are available to transmit other signals except for the second-type reference signals.

In some implementations, the first configuration information is used to indicate one or more of following: power information of the reference signals; transmission resources for transmitting the reference signals; model information of the first model for receiving and/or sending the reference signals; or whether the transmission resources for transmitting the reference signals are available for transmitting the other signals.

In some implementations, the first configuration information is used to indicate the power information of the reference signals, the first configuration information carries the first information for determining powers of the reference signals, and the first information may include one or more of following: power scaling factors of the reference signals; the first ratio information; or the second ratio information. The first ratio information is ratios of an energy per resource element (EPRE) of the first channel to EPREs of the reference signals, and the first channel is a channel for transmitting the reference signals. The second ratio information is ratios of powers of the reference signals to a total power corresponding to a resource set, and the resource set includes the transmission resources for transmitting the reference signals.

In some implementations, the first configuration information is used to indicate the transmission resources for transmitting the reference signals, and the transmission resources include one or more of following: time domain resources; frequency domain resources or spatial domain resources.

In some implementations, the first configuration information is used to indicate the model information of the first model, and the model information of the first model includes a model function of the first model and/or a model identifier of the first model.

In some implementations, the first configuration information is used to indicate the model information of the first model, the first model belonging to one of multiple models, and transmission resources of the reference signals corresponding to different models of the multiple models are different.

In some implementations, the first configuration information is carried in the first message, the first message carries multiple pieces of configuration information for configuring the reference signals, and the multiple pieces of configuration information include the first configuration information.

In some implementations, the receiving unit is further configured to receive the first indication information sent by the network device. The first indication information is used to activate the first configuration information.

In some implementations, the first indication information is carried in one or more of following: downlink control information (DCI), a media access control control element (MAC CE), or a radio resource control (RRC) message.

In some implementations, the first-type transmission resources and the second-type transmission resources belong to the first resource set, and the second-type transmission resources are all transmission resources of remaining transmission resources in the first resource set except for the first-type transmission resources.

In some implementations, the first-type transmission resources and the second-type transmission resources belong to the first resource set, and the second-type transmission resources are a part of transmission resources of remaining transmission resources in the first-type resource set except for the first-type transmission resources.

In some implementations, time domain positions of the first-type transmission resources are the same as time domain positions of the second-type transmission resources; or frequency domain positions of the first-type transmission resources are the same as frequency domain positions of the second-type transmission resources.

In some implementations, the terminal device further includes a processing unit. The processing unit is configured to start the first timer in response to receiving the first configuration information. The processing unit is further configured to use the first configuration information during operation of the first timer.

In some implementations, the processing unit is further configured to use the second configuration information in response to expiring of the first timer. The second configuration information is used for configuring the third reference signals. The number of the first-type reference signals included in the third reference signals is greater than the number of the first-type reference signals included in the reference signals.

In some implementations, the third reference signals satisfy one of following: the third reference signals include only the first-type reference signals; or the third reference signals include the first-type reference signals and the second-type reference signals.

In some implementations, the third reference signals include the first-type reference signals and the second-type reference signals, the second model for receiving and/or sending the third reference signals is different from the first model, and the first model is used for receiving and/or sending the reference signals.

In some implementations, the terminal device includes the first sending unit. The first sending unit is configured to send capability information to the network device. The capability information is used to indicate one or more of following: whether the terminal device supports receiving the reference signals; whether the terminal device supports sending the reference signals; or whether the terminal device supports receiving the reference signals based on the first model.

In some implementations, the terminal device further includes the second sending unit. The second sending unit is configured to occupy a part or all of the second-type transmission resources to send the second-type reference signals and other signals except for the second-type reference signals to the network device.

In some implementations, the first configuration information is carried in one or more of following: an RRC configuration message, DCI or MAC CE.

FIG. 18 is a schematic diagram of a network device according to the embodiments of the present disclosure. The network device 1800 illustrated in FIG. 18 includes a sending unit 1810.

The sending unit 1810 is configured to send the first configuration information to the terminal device. The first configuration information is used for configuring reference signals. The reference signals include the first-type reference signals and the second-type reference signals, transmission resources that are available to transmit the first-type reference signals are first-type transmission resources, and transmission resources that are available to transmit the second-type reference signals are second-type transmission resources. The first-type transmission resources are not available to transmit other signals except for the first-type reference signals, and the second-type transmission resources are available to transmit other signals except for the second-type reference signals.

In some implementations, the first configuration information is used to indicate one or more of following: power information of the reference signals; transmission resources for transmitting the reference signals; model information of the first model for receiving and/or sending the reference signals; or whether the transmission resources for transmitting the reference signals are available for transmitting the other signals.

In some implementations, the first configuration information is used to indicate the power information of the reference signals, the first configuration information carries the first information for determining powers of the reference signals, and the first information may include one or more of following: power scaling factors of the reference signals; the first ratio information; or the second ratio information. The first ratio information is ratios of an energy per resource element (EPRE) of the first channel to EPREs of the reference signals, and the first channel is a channel for transmitting the reference signals. The second ratio information is ratios of powers of the reference signals to a total power corresponding to a resource set, and the resource set includes the transmission resources for transmitting the reference signals.

In some implementations, the first configuration information is used to indicate the transmission resources for transmitting the reference signals, and the transmission resources include one or more of following: time domain resources; frequency domain resources or spatial domain resources.

In some implementations, the first configuration information is used to indicate the model information of the first model, and the model information of the first model includes a model function of the first model and/or a model identifier of the first model.

In some implementations, the first configuration information is used to indicate the model information of the first model, the first model belonging to one of multiple models, and transmission resources of the reference signals corresponding to different models of the multiple models are different.

In some implementations, the first configuration information is carried in the first message, the first message carries multiple pieces of configuration information for configuring the reference signals, and the multiple pieces of configuration information include the first configuration information.

In some implementations, the sending unit is further configured to send the first indication information to the terminal device. The first indication information is used to activate the first configuration information.

In some implementations, the first indication information is carried in one or more of following: downlink control information (DCI), a media access control control element (MAC CE); or a radio resource control (RRC) message.

In some implementations, the first-type transmission resources and the second-type transmission resources belong to the first resource set, and the second-type transmission resources are all transmission resources of remaining transmission resources in the first resource set except for the first-type transmission resources.

In some implementations, the first-type transmission resources and the second-type transmission resources belong to the first resource set, and the second-type transmission resources are a part of transmission resources of remaining transmission resources in the first-type resource set except for the first-type transmission resources.

In some implementations, time domain positions of the first-type transmission resources are the same as time domain positions of the second-type transmission resources; or frequency domain positions of the first-type transmission resources are the same as frequency domain positions of the second-type transmission resources.

In some implementations, the network device further includes the first processing unit. The first processing unit is configured to start the first timer in response to sending the first configuration information. The first processing unit is configured to use the first configuration information during operation of the first timer.

In some implementations, the network device further includes the second processing unit. The second processing unit is configured to use the second configuration information in response to expiring of the first timer. The second configuration information is used for configuring the third reference signals. The number of the first-type reference signals included in the third reference signals is greater than the number of the first-type reference signals included in the reference signals.

In some implementations, the third reference signals satisfy one of following: the third reference signals include only the first-type reference signals; or the third reference signals include the first-type reference signals and the second-type reference signals.

In some implementations, the third reference signals include the first-type reference signals and the second-type reference signals, the second model for receiving and/or sending the third reference signals is different from the first model, and the first model is used for receiving and/or sending the reference signals.

In some implementations, the network device includes the first receiving unit. The first receiving unit is configured to receive capability information sent by the terminal device. The capability information is used to indicate one or more of following: whether the terminal device supports receiving the reference signals; whether the terminal device supports sending the reference signals; or whether the terminal device supports receiving the reference signals based on the first model.

In some implementations, the network device further includes the second receiving unit. The second receiving unit is configured to receive the second-type reference signals and other signals except for the second-type reference signals sent by the terminal device on a part or all of the second-type transmission resources.

In some implementations, the first configuration information is carried in one or more of following: an RRC configuration message; DCI or MAC CE.

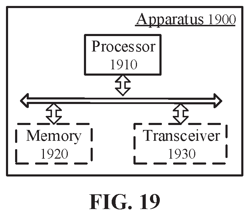

In an alternative embodiment, the receiving unit 1710 may be a transceiver 1930. The terminal device 1700 may further include a processor 1910 and a memory 1920, as specifically illustrated in FIG. 19.

In an alternative embodiment, the sending unit 1810 may be a transceiver 1930. The network device 1800 may further include a processor 1910 and a memory 1920, as specifically illustrated in FIG. 19.

FIG. 19 is a schematic configuration diagram of a communication device according to the embodiments of the present disclosure. The dashed line in FIG. 19 indicates that the unit or module is optional. The apparatus 1900 may be used to implement the method described in the method embodiments described above. The apparatus 1900 may be a chip, a terminal device, or a network device.

The apparatus 1900 may include one or more processors 1910. The processor 1910 may support the apparatus 1900 to implement the methods described in the previous method embodiments. The processor 1910 may be a general-purpose processor or a special-purpose processor. For example, the processor may be a central processing unit (CPU). Alternatively, the processor may also be another general-purpose processor, a digital signal processor (DSP), an application specific integrated circuit (ASIC), a field programmable gate array (FPGA) or other programmable logic device, a discrete gate or transistor logic device, a discrete hardware component, or the like. The general-purpose processor may be a microprocessor or the processor may be any conventional processor or the like.

The apparatus 1900 may further include one or more memories 1920. The memory 1920 has stored a program that may be executed by the processor 1910 to cause the processor 1910 to perform the method described in the above method embodiments. The memory 1920 may be independent of the processor 1910 or may be integrated in the processor 1910.

The apparatus 1900 may further include a transceiver 1930. The processor 1910 may communicate with other devices or chips through the transceiver 1930. For example, the processor 1910 may send and receive data with other devices or chips through the transceiver 1930.

The embodiments of the present disclosure further provide a computer-readable storage medium for storing a program. The computer-readable storage medium may be applied to a terminal or a network device provided by the embodiments of the present disclosure, and the program causes a computer to execute the methods executed by the terminal or the network device in respective embodiments of the present disclosure.

The embodiments of the present disclosure also provide a computer program product. The computer program product includes programs. The computer program product may be applied to a terminal or a network device provided by the embodiments of the present disclosure, and the program causes a computer to execute the methods executed by the terminal or the network device in respective embodiments of the present disclosure.

The embodiments of the present disclosure also provide a computer program. The computer program may be applied to a terminal or a network device provided by the embodiments of the present disclosure, and the computer program causes a computer to execute the methods executed by the terminal or the network device in respective embodiments of the present disclosure.

It should be understood that the terms "system" and "network" may be used interchangeably in the present disclosure. In addition, the terminology used in the present disclosure is for explanation of specific embodiments of the present disclosure only, and is not intended to limit the present disclosure. The terms "first", "second", "third" and "fourth" etc. in the specification and claims of the present disclosure and the accompanying drawings are used to distinguish different objects, and are not used to describe a specific order. Furthermore, the terms "comprising" and "having" and any variations thereof are intended to cover non-exclusive inclusions.

In the embodiments of the present disclosure, the "indication" mentioned may be a direct indication, an indirect indication, or used for describing an association relationship. For example, A indicates B, which may mean that A indicates B directly, for example, B may be acquired by A. It may also mean that A indicates B indirectly, for example A indicates C, and B may be acquired through C. It may also indicate that there is an association relationship between A and B.

In the embodiments of the present disclosure, "B corresponding to A" means that B is associated with A, and B may be determined according to A. However, it should also be understood that determining B according to A does not mean that B is determined according to A alone, and that B may also be determined according to A and/or other information.

In the embodiments of the present disclosure, the term "correspondence" may indicate that there is a direct correspondence or indirect correspondence relationship between the two objects, may indicate that there is an association relationship between the two objects, or may indicate a relationship between indicating and being instructed, configuring and being configured, or the like.

In the embodiments of the present disclosure, "predefined" or "preconfigured" may be realized by storing corresponding codes, tables, or other methods that may be used to indicate relevant information in advance in devices (including, for example, terminal devices and network devices), and the present disclosure does not limit specific implementation methods thereof. For example, "predefined" may refer to being defined in the protocol.

In the embodiments of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiments of the present disclosure is only used for describing an association relationship between association objects, and indicates that there may be three kinds of relationships, for example, A and/or B, which may indicate that A exists alone, A and B exist simultaneously, and B exists alone. In addition, the character "/" in the present disclosure generally indicates that there is an "or" relationship between the related objects.

In various embodiments of the present disclosure, the size of the sequence number of the above-described processes does not mean the sequence of execution, and the sequence of execution of each process should be determined by its function and internal logic, and should not constitute any limitation on the implementation process of the embodiments of the present disclosure.

In several embodiments provided herein, it should be understood that the disclosed systems, apparatuses, and methods may be implemented in other ways. For example, the apparatus embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solution of the present embodiment.

In addition, each functional unit in each embodiments of the present disclosure may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that may be read by a computer or a data storage device such as a server, a data center, or the like that includes one or more available medium integrations. The available medium may be magnetic medium (e.g., floppy disk, hard disk, magnetic tape), optical medium (e.g., digital video disc (DVD)), or semiconductor medium (e.g., solid state disk (SSD)), etc.

The foregoing is merely specific embodiments of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be subject to the scope of protection of the claims.

## Claims

1. A method for transmitting reference signals, comprising:
receiving, by a terminal device, first configuration information sent by a network device, wherein the first configuration information is used for configuring reference signals,
wherein the reference signals comprise a first-type reference signal and a second-type reference signal, a transmission resource that is available to transmit the first-type reference signal is a first-type transmission resource, and a transmission resource that is available to transmit the second-type reference signal is a second-type transmission resource,
wherein the first-type transmission resource is not available to transmit other signals except for the first-type reference signal, and the second-type transmission resource is available to transmit other signals except for the second-type reference signal.

2. The method of claim 1, wherein the first configuration information is used to indicate one or more of following:
power information of the reference signals;
transmission resources for transmitting the reference signals;
model information of a first model for receiving and/or sending the reference signals; or
whether the transmission resources for transmitting the reference signals are available for transmitting the other signals.

3. The method of claim 2, wherein the first configuration information is used to indicate the power information of the reference signals, the first configuration information carries first information for determining powers of the reference signals, and the first information may comprise one or more of following:
power scaling factors of the reference signals;
first ratio information, wherein the first ratio information is ratios of an energy per resource element (EPRE) of a first channel to an EPRE of the reference signals, and the first channel is a channel for transmitting the reference signals; or
second ratio information, wherein the second ratio information is ratios of powers of the reference signals to a total power corresponding to a resource set, and the resource set comprises the transmission resources for transmitting the reference signals.

4. The method of claim 2 or 3, wherein the first configuration information is used to indicate the transmission resources for transmitting the reference signals, and the transmission resources comprise one or more of following: time domain resources, frequency domain resources or spatial domain resources.

5. The method of any one of claims 2 to 4, wherein the first configuration information is used to indicate the model information of the first model, and the model information of the first model comprises a model function of the first model and/or a model identifier of the first model.

6. The method of any one of claims 2 to 5, wherein the first configuration information is used to indicate the model information of the first model, the first model belongs to one of a plurality of models, and transmission resources of the reference signals corresponding to different models of the plurality of models are different.

7. The method of any one of claims 1 to 6, wherein the first configuration information is carried in a first message, the first message carries a plurality of pieces of configuration information for configuring the reference signals, and the plurality of pieces of configuration information comprise the first configuration information.

8. The method of claim 7, further comprising:
receiving, by the terminal device, first indication information sent by the network device, wherein the first indication information is used to activate the first configuration information.

9. The method of claim 8, wherein the first indication information is carried in one or more of following: downlink control information (DCI), a media access control control element (MAC CE), or a radio resource control (RRC) message.

10. The method of any one of claims 1 to 9, wherein the first-type transmission resource and the second-type transmission resource belong to a first resource set, and the second-type transmission resource is all transmission resource(s) of remaining transmission resources in the first resource set except for the first-type transmission resource.

11. The method of any one of claims 1 to 9, wherein the first-type transmission resource and the second-type transmission resource belong to a first resource set, and the second-type transmission resource is a part of transmission resources of remaining transmission resources in the first-type resource set except for the first-type transmission resource.

12. The method of claim 11, wherein a time domain position of the first-type transmission resource is same as a time domain position of the second-type transmission resource; or
a frequency domain position of the first-type transmission resource is same as a frequency domain position of the second-type transmission resource.

13. The method of any one of claims 1 to 12, further comprising:
in response to receiving the first configuration information, starting, by the terminal device, a first timer; and
using, by the terminal device, the first configuration information during operation of the first timer.

14. The method of claim 13, further comprising:
in response to expiring of the first timer, using, by the terminal device, second configuration information, wherein the second configuration information is used for configuring third reference signals, wherein a number of the first-type reference signals comprised in the third reference signals is greater than a number of the first-type reference signals comprised in the reference signals.

15. The method of claim 14, wherein the third reference signals satisfy one of following:
the third reference signals comprise only the first-type reference signals; or
the third reference signals comprise the first-type reference signals and the second-type reference signal.

16. The method of claim 14 or 15, wherein the third reference signals comprise the first-type reference signals and the second-type reference signal, a second model for receiving and/or sending the third reference signals is different from a first model, and the first model is used for receiving and/or sending the reference signals.

17. The method of any one of claims 1 to 16, comprising:
sending, by the terminal device, capability information to the network device, wherein the capability information is used to indicate one or more of following:
whether the terminal device supports receiving the reference signals;
whether the terminal device supports sending the reference signals; or
whether the terminal device supports receiving the reference signals based on the first model.

18. The method of any one of claims 1 to 17, further comprising:
occupying, by the terminal device, a part or all of second-type transmission resources to send the second-type reference signal and other signals except for the second-type reference signal to the network device.

19. The method of any one of claims 1 to 18, wherein the first configuration information is carried in one or more of following: an RRC configuration message, DCI or a MAC CE.

20. A method for transmitting reference signals, comprising:
sending, by a network device, first configuration information to a terminal device, wherein the first configuration information is used for configuring reference signals,
wherein the reference signals comprise a first-type reference signal and a second-type reference signal, a transmission resource that is available to transmit the first-type reference signal is a first-type transmission resource, and a transmission resource that is available to transmit the second-type reference signal is a second-type transmission resource,
wherein the first-type transmission resource is not available to transmit other signals except for the first-type reference signal, and the second-type transmission resource is available to transmit other signals except for the second-type reference signal.

21. The method of claim 20, wherein the first configuration information is used to indicate one or more of following:
power information of the reference signals;
transmission resources for transmitting the reference signals;
model information of a first model for receiving and/or sending the reference signals; or
whether the transmission resources for transmitting the reference signals are available for transmitting the other signals.

22. The method of claim 21, wherein the first configuration information is used to indicate the power information of the reference signals, the first configuration information carries first information for determining powers of the reference signals, and the first information may comprise one or more of following:
power scaling factors of the reference signals;
first ratio information, wherein the first ratio information is ratios of an energy per resource element (EPRE) of a first channel to an EPRE of the reference signals, and the first channel is a channel for transmitting the reference signals; or
second ratio information, wherein the second ratio information is ratios of powers of reference signals to a total power corresponding to a resource set, and the resource set comprises the transmission resources for transmitting the reference signals.

23. The method of claim 21 or 22, wherein the first configuration information is used to indicate the transmission resources for transmitting the reference signals, and the transmission resources comprise one or more of following: time domain resources, frequency domain resources or spatial domain resources.

24. The method of any one of claims 21 to 23, wherein the first configuration information is used to indicate the model information of the first model, and the model information of the first model comprises a model function of the first model and/or a model identifier of the first model.

25. The method of any one of claims 21 to 24, wherein the first configuration information is used to indicate the model information of the first model, the first model belongs to one of a plurality of models, and transmission resources of the reference signals corresponding to different models of the plurality of models are different.

26. The method of any one of claims 21 to 25, wherein the first configuration information is carried in a first message, and the first message carries a plurality of pieces of configuration information for configuring the reference signals, and the plurality of pieces of configuration information comprise the first configuration information.

27. The method of claim 26, further comprising:
sending, by the network device, first indication information to the terminal device, wherein the first indication information is used to activate the first configuration information.

28. The method of claim 27, wherein the first indication information is carried in one or more of following: downlink control information (DCI), a media access control control element (MAC CE), or a radio resource control (RRC) message.

29. The method of any one of claims 21 to 28, wherein the first-type transmission resource and the second-type transmission resource belong to a first resource set, and the second-type transmission resource is all transmission resource(s) of remaining transmission resources in the first resource set except for the first-type transmission resource.

30. The method of any one of claims 21 to 28, wherein the first-type transmission resource and the second-type transmission resource belong to a first resource set, and the second-type transmission resource is a part of transmission resources of remaining transmission resources in the first-type resource set except for the first-type transmission resources.

31. The method of claim 30, wherein a time domain position of the first-type transmission resource is same as a time domain position of the second-type transmission resource; or
a frequency domain position of the first-type transmission resource is same as a frequency domain position of the second-type transmission resource.

32. The method of any one of claims 21 to 31, further comprising:
in response to sending the first configuration information, starting, by the network device, a first timer; and
using, by the network device, the first configuration information during operation of the first timer.

33. The method of claim 32, further comprising:
in response to expiring of the first timer, using, by the network device, second configuration information, wherein the second configuration information is used for configuring third reference signals, and a number of the first-type reference signals comprised in the third reference signals is greater than a number of the first-type reference signals comprised in the reference signals.

34. The method of claim 33, wherein the third reference signals satisfy one of following:
the third reference signals comprise only the first-type reference signals; or
the third reference signals comprise the first-type reference signals and the second-type reference signal.

35. The method of claim 33 or 34, wherein the third reference signals comprise the first-type reference signals and the second-type reference signal, a second model for receiving and/or sending the third reference signals is different from a first model, and the first model is used for receiving and/or sending the reference signals.

36. The method of any one of claims 21 to 35, comprising:
receiving, by the network device, capability information sent by the terminal device, wherein the capability information is used to indicate one or more of following:
whether the terminal device supports receiving the reference signals;
whether the terminal device supports sending the reference signals; or
whether the terminal device supports receiving the reference signals based on the first model.

37. The method of any one of claims 21 to 36, further comprising:
receiving, by the network device, on a part or all of second-type transmission resources, the second-type reference signal and other signals except for the second-type reference signal sent by the terminal device.

38. The method of any of claims 21 to 37, wherein the first configuration information is carried in one or more of following: an RRC configuration message, DCI or a MAC CE.

39. A terminal device, comprising:
a receiving unit, configured to receive first configuration information sent by a network device, wherein the first configuration information is used for configuring reference signals,
wherein the reference signals comprise a first-type reference signal and a second-type reference signal, a transmission resource that is available to transmit the first-type reference signal is a first-type transmission resource, and a transmission resource that is available to transmit the second-type reference signal is a second-type transmission resource,
wherein the first-type transmission resource is not available to transmit other signals except for the first-type reference signal, and the second-type transmission resource is available to transmit other signals except for the second-type reference signal.

40. The terminal device of claim 39, wherein the first configuration information is used to indicate one or more of the following:
power information of the reference signals;
transmission resources for transmitting the reference signals;
model information of a first model for receiving and/or sending the reference signals; or
whether the transmission resources for transmitting the reference signals are available for transmitting the other signals.

41. The terminal device of claim 40, wherein the first configuration information is used to indicate the power information of the reference signals, the first configuration information carries first information for determining powers of the reference signals, and the first information may comprise one or more of following:
power scaling factors of the reference signals;
first ratio information, wherein the first ratio information is ratios of an energy per resource element (EPRE) of a first channel to an EPRE of the reference signals, and the first channel is a channel for transmitting the reference signals; or
second ratio information, wherein the second ratio information is ratios of powers of reference signals to a total power corresponding to a resource set, and the resource set comprises the transmission resources for transmitting the reference signals.

42. The terminal device of claim 40 or 41, wherein the first configuration information is used to indicate the transmission resources for transmitting the reference signals, and the transmission resources comprise one or more of following: time domain resources, frequency domain resources or spatial domain resources.

43. The terminal device of any one of claims 40 to 42, wherein the first configuration information is used to indicate the model information of the first model, and the model information of the first model comprises a model function of the first model and/or a model identifier of the first model.

44. The terminal device of any one of claims 40 to 43, wherein the first configuration information is used to indicate the model information of the first model, the first model belongs to one of a plurality of models, and transmission resources of the reference signals corresponding to different models of the plurality of models are different.

45. The terminal device of any one of claims 39 to 44, wherein the first configuration information is carried in a first message, and the first message carries a plurality of pieces of configuration information for configuring the reference signals, and the plurality of pieces of configuration information comprise the first configuration information.

46. The terminal device of claim 45, wherein the receiving unit is further configured to receive first indication information sent by the network device, and the first indication information is used to activate the first configuration information.

47. The terminal device of claim 46, wherein the first indication information is carried in one or more of following: downlink control information (DCI), a media access control control element (MAC CE), or a radio resource control (RRC) message.

48. The terminal device of any one of claims 39 to 47, wherein the first-type transmission resource and the second-type transmission resource belong to a first resource set, and the second-type transmission resource is all transmission resource(s) of remaining transmission resources in the first resource set except for the first-type transmission resource.

49. The terminal device of any one of claims 39 to 47, wherein the first-type transmission resource and the second-type transmission resource belong to a first resource set, and the second-type transmission resource is a part of transmission resources of remaining transmission resources in the first-type resource set except for the first-type transmission resources.

50. The terminal device of claim 49, wherein a time domain position of the first-type transmission resource is same as a time domain position of the second-type transmission resource; or
a frequency domain position of the first-type transmission resource is same as a frequency domain position of the second-type transmission resource.

51. The terminal device of any one of claims 39 to 50, further comprising:
a processing unit, configured to in response to receiving the first configuration information, start a first timer,
wherein the processing unit is further configured to use the first configuration information during operation of the first timer.

52. The terminal device of claim 51, wherein the processing unit is further configured to:
in response to expiring of the first timer, use second configuration information, wherein the second configuration information is used for configuring third reference signals, wherein a number of the first-type reference signals comprised in the third reference signals is greater than a number of the first-type reference signals comprised in the reference signals.

53. The terminal device of claim 52, wherein the third reference signals satisfy one of following:
the third reference signals comprise only the first-type reference signals; or
the third reference signals comprise the first-type reference signals and the second-type reference signal.

54. The terminal device of claim 52 or 53, wherein the third reference signals comprise the first-type reference signals and the second-type reference signal, a second model for receiving and/or sending the third reference signals is different from a first model, and the first model is used for receiving and/or sending the reference signals.

55. The terminal device of any one of claims 39 to 54, comprising:
a first sending unit, configured to send capability information to the network device, wherein the capability information is used to indicate one or more of following:
whether the terminal device supports receiving the reference signals;
whether the terminal device supports sending the reference signals; or
whether the terminal device supports receiving the reference signals based on the first model.

56. The terminal device of any one of claims 39 to 55, further comprising:
a second sending unit, configured to occupy a part or all of second-type transmission resources to send the second-type reference signal and other signals except for the second-type reference signal to the network device.

57. The terminal device of any one of claims 39 to 56, wherein the first configuration information is carried in one or more of following: an RRC configuration message, DCI or a MAC CE.

58. A network device, comprising:
a sending unit, configured to send first configuration information to a terminal device, wherein the first configuration information is used for configuring reference signals,
wherein the reference signals comprise a first-type reference signal and a second-type reference signal, a transmission resource that is available to transmit the first-type reference signal is a first-type transmission resource, and a transmission resource that is available to transmit the second-type reference signal is a second-type transmission resource,
wherein the first-type transmission resource is not available to transmit other signals except for the first-type reference signal, and the second-type transmission resource is available to transmit other signals except for the second-type reference signal.

59. The network device of claim 58, wherein the first configuration information is used to indicate one or more of following:
power information of the reference signals;
transmission resources for transmitting the reference signals;
model information of a first model for receiving and/or sending the reference signals; or
whether the transmission resources for transmitting the reference signals are available for transmitting the other signals.

60. The network device of claim 59, wherein the first configuration information is used to indicate the power information of the reference signals, the first configuration information carries first information for determining powers of the reference signals, and the first information may comprise one or more of following:
power scaling factors of the reference signals;
first ratio information, wherein the first ratio information is ratios of an energy per resource element (EPRE) of a first channel to an EPRE of the reference signals, and the first channel is a channel for transmitting the reference signals; or
second ratio information, wherein the second ratio information is ratios of powers of reference signals to a total power corresponding to a resource set, and the resource set comprises the transmission resources for transmitting the reference signals.

61. The network device of claim 59 or 60, wherein the first configuration information is used to indicate the transmission resources for transmitting the reference signals, and the transmission resources comprise one or more of following: time domain resources, frequency domain resources or spatial domain resources.

62. The network device of any one of claims 59 to 61, wherein the first configuration information is used to indicate the model information of the first model, and the model information of the first model comprises a model function of the first model and/or a model identifier of the first model.

63. The network device of any one of claims 59 to 62, wherein the first configuration information is used to indicate the model information of the first model, the first model belongs to one of a plurality of models, and transmission resources of the reference signals corresponding to different models of the plurality of models are different.

64. The network device of any one of claims 59 to 63, wherein the first configuration information is carried in a first message, and the first message carries a plurality of pieces of configuration information for configuring the reference signals, and the plurality of pieces of configuration information comprise the first configuration information.

65. The network device of claim 64, wherein the sending unit is further configured to send first indication information to the terminal device, and the first indication information is used to activate the first configuration information.

66. The network device of claim 65, wherein the first indication information is carried in one or more of following: downlink control information (DCI), a media access control control element (MAC CE), or a radio resource control (RRC) message.

67. The network device of any one of claims 59 to 66, wherein the first-type transmission resource and the second-type transmission resource belong to a first resource set, and the second-type transmission resource is all transmission resource(s) of remaining transmission resources in the first resource set except for the first-type transmission resource.

68. The network device of any one of claims 59 to 66, wherein the first-type transmission resource and the second-type transmission resource belong to a first resource set, and the second-type transmission resource is a part of transmission resources of remaining transmission resources in the first-type resource set except for the first-type transmission resource.

69. The network device of claim 68, wherein a time domain position of the first-type transmission resource is same as a time domain position of the second-type transmission resource; or
a frequency domain position of the first-type transmission resource is same as a frequency domain position of the second-type transmission resource.

70. The network device of any one of claims 59 to 69, further comprising:
a first processing unit, configured to: in response to sending the first configuration information, start a first timer,
wherein the first processing unit is further configured to use the first configuration information during operation of the first timer.

71. The network device of claim 70, further comprising:
a second processing unit, configured to: in response to expiring of the first timer, use second configuration information, wherein the second configuration information is used for configuring third reference signals, and a number of the first-type reference signals comprised in the third reference signals is greater than a number of the first-type reference signals comprised in the reference signals.

72. The network device of claim 71, wherein the third reference signals satisfy one of following:
the third reference signals comprise only the first-type reference signals; or
the third reference signals comprise the first-type reference signals and the second-type reference signal.

73. The network device of claim 71 or 72, wherein the third reference signals comprise the first-type reference signals and the second-type reference signal, a second model for receiving and/or sending the third reference signals is different from a first model, and the first model is used for receiving and/or sending the reference signals.

74. The network device of any one of claims 59 to 73, comprising:
a first receiving unit, configured to receive capability information sent by the terminal device, wherein the capability information is used to indicate one or more of following:
whether the terminal device supports receiving the reference signals;
whether the terminal device supports sending the reference signals; or
whether the terminal device supports receiving the reference signals based on the first model.

75. The network device of any one of claims 59 to 74, further comprising:
a second receiving unit, configured to receive, on a part or all of second-type transmission resources, the second-type reference signal and other signals except for the second-type reference signals sent by the terminal device.

76. The network device of any of claims 59 to 75, wherein the first configuration information is carried in one or more of following: an RRC configuration message, DCI or a MAC CE.

77. A terminal device comprising a transceiver, a memory and a processor, wherein the memory is configured to store programs, and the processor is configured to invoke the programs in the memory to control the transceiver to receive or send signals to cause the terminal device to perform the method of any one of claims 1-19.

78. A network device comprising a transceiver, a memory and a processor, wherein the memory is configured to store programs, and the processor is configured to invoke the programs in the memory to control the transceiver to receive or send signals to cause the network device to perform the method of any one of claims 20-38.

79. An apparatus comprising a processor for invoking programs from a memory to cause the apparatus to perform the method of any one of claims 1-38.

80. A chip comprising a processor for invoking programs from a memory to cause a device on which the chip is mounted to performs the method of any one of claims 1-38.

81. A computer-readable storage medium having stored thereon a program that causes a computer to perform the method of any one of claims 1-38.

82. A computer program product comprising a program that causes a computer to perform the method of any one of claims 1-38.

83. A computer program that causes a computer to perform the method of any one of claims 1-38.
